# EUROPÄISCHE PATENTSCHRIFT

(11) **EP 0 735 113 B1**
(45) Veröffentlichungstag und Bekanntmachung des Hinweises auf die Patenterteilung: **18.10.2000**
(21) Anmeldenummer: 96109924.9
(22) Anmeldetag: 17.09.1991
(51) Int. Cl.: C09B 67/22, D06P 3/66, D06P 1/38, C09B 62/002

(54) **Faserreaktive Farbstoffmischungen und deren Verwendung**
Mixtures of reactive dyes and their use
Mélanges de colorants réactifs et leur utilisation

(30) Priorität: 25.09.1990 CH 307790
(43) Veröffentlichungstag der Anmeldung: 02.10.1996
(62) Teilanmeldung aus: 91810734.3
(73) Patentinhaber: Ciba Specialty Chemicals Holding Inc., 4057 Basel (CH)
(72) Erfinder: Tzikas, Athanassios, Dr., 4133 Pratteln (CH)

(56) Entgegenhaltungen:
- DE-A- 2 611 550
- GB-A- 2 226 336
- Rys,Zollinger "Farbstoffchemie",3.Aufl. (1982), Seiten 76-85

## Beschreibung

Die vorliegende Erfindung betrifft Mischungen von faserreaktiven Farbstoffen, die zum Färben von cellulosehaltigen Fasermaterialien aus wässrigem Bad sowie zum Bedrucken cellulosehaltiger Fasermaterialien geeignet sind, die sich für Ausziehfärbeverfahren und Kontinuefärbeverfahren eignen, und die nass- und lichtechte Färbungen ergeben.

Es sind bereits aus der GB-A-2226336 Farbstoffgemische für das Trichromiefärben von Textilfasern enthaltend einen gelbfärbenden Farbstoff der unten angegebenen Formel (1) und einen rotfärbenden Farbstoff der unten angegebenen Formel (2) bekannt, worin jedoch B bestimmte aliphatische Brückenglieder bedeudet.

Gegenstand der Erfindung sind Farbstoffmischungen, die dadurch gekennzeichnet sind, dass sie Farbstoffe der Formeln 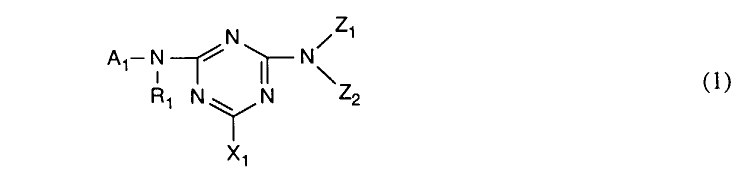 und 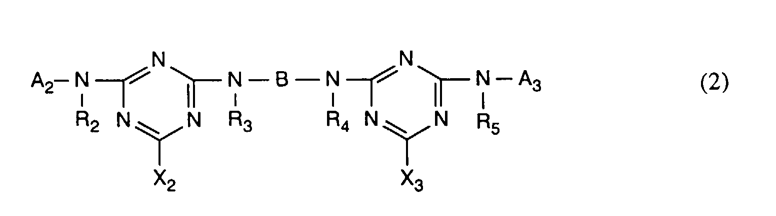 enthalten, worin A₁, A₂ und A₃ unabhängig voneinander der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aromatisches Brückenglied, und Z₁ und Z₂ Wasserstoff oder ein aliphatischer, aromatischer oder heterocyclischer Rest sind, oder Z₁ und Z₂ mit dem sie verbindenden Stickstoffatom einen fünf- bis siebengliedrigen Ring bilden, der ausser C-Atomen weitere Heteroatome enthalten kann, und
X₁, X₂ und X₃ unabhängig voneinander je Fluor, Chlor, Brom, Sulfo oder Carboxypyridinium bedeuten.

Der Rest A₁, A₂ bzw. A₃ kann an seinem Grundgerüst die bei organischen Farbstoffen üblichen Substituenten gebunden enthalten.

Als Beispiele für weitere Substituenten im Rest A₁, A₂ bzw. A₃ seien genannt:
Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, insbesondere Alkanoylaminogruppen, wie Acetylamino, Propionylamino oder Benzoylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo sowie faserreaktive Reste. Vorzugsweise enthält der Rest A₁, A₂ bzw. A₃ eine oder mehrere Sulfonsäuregruppen. Reaktivfarbstoffe der Formeln (1) und (2), worin A₁, A₂ bzw. A₃ der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest R₁, R₂, R₃, R₄ bzw. R₅ ist, falls es sich um einen Alkylrest handelt, geradkettig oder verzweigt; er kann weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R₁, R₂, R₃, R₄ und R₅ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind R₁, R₂, R₃, R₄ und R₅ unabhängig voneinander Wasserstoff, Methyl oder Aethyl.

Die Reste X₁, X₂ und X₃ bedeuten unabhängig voneinander Fluor, Chlor, Brom, Carboxypyridinium oder eine Sulfogruppe. Vorzugsweise ist X₁, X₂ und X₃ Fluor oder Chlor.

Das aromatische Brückenglied B ist vorzugsweise ein Aralkylen- oder Arylenrest. Als Arylenrest ist B z.B. ein Naphthylenrest, der Rest eines Diphenyls oder Stilbens oder insbesondere ein Phenylenrest. Als Aralkylenrest ist B insbesondere ein Benzylenrest. Der Rest B kann weitere Substituenten enthalten, z.B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propoxy und Isopropoxy, Carboxy oder Sulfo. Vorzugsweise ist B gegebenenfalls substituiertes Phenylen. Bevorzugt ist der Phenylenrest und der Sulfophenylenrest.

Als substituierte Aminogruppen 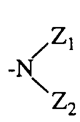 kommen z.B. in Betracht: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können. Die oben genannten Alkyl-, Cycloalky-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, C₁-C₄-Alkyl, C₁-C₄-Alkoxy, Acylaminogruppen, wie Acetylamino, Ureido, Hydroxy, Carboxy, Sulfomethyl und Sulfo. Die Aminogruppe 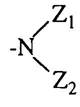 kann ferner faserreaktive Reste enthalten.

Als Beispiele für den Aminorest 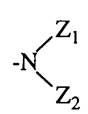 in Formel (1) seien genannt: -NH₂, Methylamino, Aethylamino, Propylamino, Isopropylamino, Butylamino, β-(Acetylamino)äthylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamno, Cyclohexylamino, N-Methyl-N-phenylamino, N-Aethyl-N-phenylamino, N-Propyl-N-phenylamino, N-Butyl-N-phenylamino, N-β-Cyanäthyl-N-phenylamino, N-Aethyl-2-methylphenylamino, N-Aethyl-4-methylphenylamino, N-Aethyl-3-sulfophenylamino, N-Aethyl-4-sulfophenylamino, Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1-)-amino, 4,6,8-Trisulfo3,6-Disulfonaphthyl-(1)-amino, 6-Sulfonaphthyl-(2)-amino, Pyridyl-(2)-amino, Morpholino, Piperidino und Piperazino.

Ferner sind in Betracht zu ziehen, Reaktivfarbstoffe der Formeln (1) und (2), worin der Rest A₁, A₂ bzw. A₃ noch einen weiteren Reaktivrest einschliesst. Die zusätzlichen, in A₁, A₂ bzw. A₃ eingeschlossenen Reaktivreste können über Aminogruppen oder in anderer Weise, z.B. durch eine direkte Bindung an A₁, A₂ bzw. A₃ gebunden sein.

Ein gegebenenfalls in A₁, A₂ bzw. A₃ oder Z₁ bzw. Z₂ eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl-oder Halogenpropionylrest.

Für die in A₁, A₂, A₃, Z₁ und Z₂ eingeschlossenen zusätzlichen Reaktivreste kommen insbesondere heterocyclische Reste in Betracht, welche mindestens einen abspaltbaren Substituenten an einen heterocyclischen Rest gebunden enthalten, unter anderem solche, die mindestens einen reaktiven Substituenten an einen 5- oder 6-gliedrigen heterocyclischen Ring gebunden enthalten, wie an einen Monazin-, Diazin-, Triazin- z.B. Pyridin-, Pyrimidin-, Pridazin-, Pyrazin-, Thiazin-, Oxazin oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen: Halogen (Cl, Br oder F), Ammonium einschliesslich Hydrazinium, Sulfonium, Sulfonyl, Azido-(N₃), Rhodanido, Thio, Thiolether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chlortriazinyl-6-, 2-Arylaminound substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituieres Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlor-triazinyl-6-, 2,4-Difluor-triazinyl-6-, Monofluortriazinylreste, die durch Amino-, Alkylamino-, Aralkylamino-, Acylaminogruppen substituiert sind, wobei Alkyl, insbesondere gegebenenfalls substituiertes C₁-C₄-Alkyl, Aralkyl, insbesondere gegebenenfalls substituiertes Phenyl-, C₁-C₄-Alkyl und Aryl, insbesondere gegebenenfalls durch Sulfo-, Alkyl-, insbesondere C₁-C₄-Alkyl-, Alkoxy, insbesondere C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethyl-amino-4-fluor-triazinyl-6, 2-iso-Propylamino-4-fluortriazinyl-6, 2-Dimethylamino-4-fluor-triazinyl-6, 2-Diethylamino-4-fluor-triazinyl-6, 2-β-Methoxy-ethylamino-4-fluortriazinyl-6, 2-β-Hydroxyethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-4-fluortriazinyl-6, 2-β-Cyanethyl-amino-4-fluor-triazinyl-6, 2-Benzolamino-4-fluor-triazinyl-6, 2-β-Phenylethylamino-4-fluor-triazinyl-6, 2-Benzyl-methylamino-4-fluor-triazinyl-6, 2-(2'-, 3'- oder 4'-Sulfobenzyl)-amino-4-fluor-triazinyl-6, 2-Cyclohexylamino-4-fluortriazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluortriazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluortriazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-, Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazin6'-yl-1')-phenylsulfonyl- oder -carbonyl-, β-(4',5'-Dichlorpyridazon-6'-yl-1')-ethyl-carbonyl, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methylpyrimidinyl-4, 6-Fluor-5-chlor-2-methylpyrimidinyl-4, 5,6-Difluor-pyrimidinyl-4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methyl-sulfonyl-pyrimidinyl-4, 6-Fluor-5-phenylsulfonylpyrimidinyl-4, sulfonylgruppenhaltige Triazinreste, wie 2,4-Bis-(phenylsulfonyl)triazinyl-6, 2-(3'-Carboxyphenyl)-sulfonyl-4-chlortriazinyl-6, 2-(3'-Sulfophenyl)sulfonyl-4-chlortriazinyl-6, 2,4-Bis-(3'-carboxyphenylsulfonyl)-triazinyl-6; sulfonylgruppenhaltige Pyrimidinringen, wie 2-Carboxymethylsulfonyl-pyrimidinyl-4-, 2-Methylsulfonyl-6-methylpyrimidinyl-4, 2-Methylsulfonyl-6-ethyl- pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonylpyrimidinyl-4, 2-Phenyl-sulfonyl-pyrimidinyl-4-, 2-Trichlormethylsulfonyl-6-methyl-pyrimidinyl-4-, 2-methylsulfonyl-5-chlor-6-methylpyrimidinyl-4-, 2-Methylsulfonyl-5-brom-6-methyl-pyrimidinyl-4-, 2-Methyl-sulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethylpyridinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfopyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl, 2,6-Bis(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6, 2-(2-Isopropyliden-1,1-dimethyl)hydrazinium-4-phenylamino- oder -4-(o-, m- oder p-sulfophenyl)-amino-triazinyl-6-, 2-N-Aminopyrrolidinium- oder 2-Amino-piperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Ethoxysulfonylbenzthiazol-5-oder 6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxazol-5- oder -6-carbonyl- oder -sulfonyl-, 2-Chlor-benzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl-4, 2,5-Dichlor-6-methylsulfonyl-pyrimidinyl-4.

Desweiteren sind Reaktivgruppen der aliphatischen Reihe zu nennen, wie Acrylolyl-, Mono-, Di- oder Trichloracryloyl-, wie -CO-CH=CH-Cl, -CO-CCl=CH₂, -CO-CCl=CH-CH₃, ferner -CO-CCl=CH-COOH, -CO-CH=CCl-COOH, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-1)-aryloxy-, α- oder β-Bromacrylolyl-, α- oder β-Alkyl- oder Arylsulfoacrylolyl-Gruppe, wie α- oder β-Methylsulfonylacrylolyl, Chloracetyl.

Als aliphatischer Rest Z₁ bzw. Z₂ in Formel (1) kommt z.B. ein gegebenenfalls substituierter C₁-C₈-Alkylrest oder ein gegebenenfalls substituierter C₅-C₇-Cycloalkylrest in Betracht.

Z₁ und Z₂ als C₁-C₈-Alkyl sind z.B. Methyl, Aethyl, Propyl, Isopropyl, Butyl, Isobutyl, sek.-Butyl, tert.-Butyl, n-Pentyl, n-Hexyl oder n-Octyl. Die C₁-C₈-Alkylreste Z₁ und Z₂ können substituiert sein, z.B. durch Halogen, Hydroxy, Cyan, Carboxy, C₁-C₄-Alkoxy, C₂-C₄-Alkanoyl, Hydroxy-C₂-C₄-alkoxy, Sulfo, Sulfato, Phenyl und Naphthyl, wobei der Phenyl- oder Naphthylrest weitersubstituiert sein kann, z.B. wie für A₁, A₂ oder A₃ angegeben. Als Beispiele seien genannt: β-Carboxyäthyl, β-Cyanäthyl, Sulfomethyl, β-Sulfoäthyl, Benzyl, Phenäthyl, β-Acetylaminoäthyl.

Als C₅-C₇-Cycloalkyl kommt für Z₁ und Z₂ der Cyclopentyl-, Cyclohexyl- oder Cycloheptyl-Rest in Betracht, der weitersubstituiert sein kann z.B. durch C₁-C₄-Alkyl. Als Beispiele seien genannt: Cyclopentyl, Cyclohexyl, 4-Methylcyclohexyl, Cycloheptyl.

Als aromatischer Rest kommt für Z₁ und Z₂ insbesondere Phenyl oder Naphthyl sowie die z.B. durch C₁-C₄-Alkyl, wie z.B. Methyl, Aethyl, n-Propyl, Isopropyl, n-Butyl, C₁-C₄-Alkoxy, wie z.B. Methoxy oder Aethoxy, Halogen, wie z.B. Fluor, Chlor oder Brom, Carboxy, Hydroxy oder Sulfo substituierte Phenyl- oder Naphthylreste in Betracht.

Als heterocyclischer Rest kommt für Z₁ und Z₂ insbesondere ein Furan-, Thiophen-, Pyrazol-, Pyridin-, Pyrimidin-, Chinolin-, Benzimidazol-, Benzthiazol- und Benzoxazolrest in Betracht, wobei die genannten Reste substituiert sein können durch die für A₁, A₂ bzw. A₃ angegebenen Substituenten.

Bilden Z₁ und Z₂ zusammen mit dem sie verbindenden Stickstoffatom, gegebenenfalls unter Einschluss eines weiteren Heteroatoms einen stickstoffhaltigen heterocyclischen Ring, so handelt es sich z.B. um den Piperidinyl-, Piperazinyl- oder Morpholinyl-Rest.

Bevorzugte Farbstoffmischungen der Reaktivfarbstoffe der Formeln (1) und (2) sind dadurch gekennzeichnet, dass
a) A₁, A₂, A₃, Z₁ und Z₂ unabhängig voneinander faserreaktive Reste enthalten,
b) das Gewichtsverhältnis der Farbstoffe der Formeln (1):(2) 5:95 bis 95:5, insbesondere 30:70 bis 70:30 ist,
c) B gegebenenfalls substituiertes Phenylen oder ein Rest der Formel 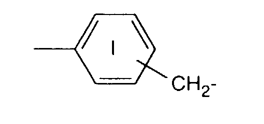 ist, wobei der Benzring I weitere Substituenten enthalten kann, insbesondere ist B 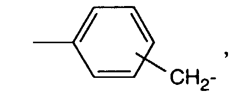
d) der Rest -N(Z₁)Z₂ -NH₂, 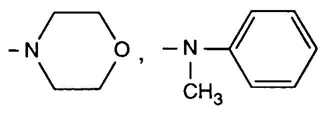 oder -NH-(CH₂)₂-NH-CO-CH₃ ist,
e) X₁, X₂ und X₃ unabhängig voneinander Fluor oder Chlor, insbesondere Fluor, sind,
f) R₁, R₂, R₃, R₄ und R₅ unabhängig voneinander Wasserstoff, Methyl oder Aethyl sind. Insbesondere bedeuten R₃ und R₄ Wasserstoff,
g) A₁, A₂ und A₃ unabhängig voneinander Monoazo- oder Disazofarbstoffreste, Metallkomplexazofarbstoffreste oder Formazanfarbstoffreste sind,
h) die Reste A₂ und A₃ identisch sind,
i) die Reste A₁, A₂ und A₃ identisch sind.

Besonders bevorzugte Farbstoffmischungen der Reaktivfarbstoffe der Formeln (1) und (2) sind dadurch gekennzeichnet, dass
a) X₁, X₂ und X₃ Fluor bedeuten,
b) R₃ und R₄ je ein Wasserstoffatom bedeuten,
c) der Benzolring I unsubstituiert oder durch Sulfo substituiert ist,
d) A₂ die gleiche Bedeutung wie A₃ und R₂ die gleiche Bedeutung wie R₅ hat,
e) A₁, A₂ und A₃ je ein Azo-, Metallkomplexazo- oder Formazanfarbstoffrest ist.

Besonders wichtig sind Farbstoffmischungen der Reaktivfarbstoffe der Formeln (1) und (2), worin A₁, A₂ und A₃ je ein Rest der folgenden Formeln (3) bis (15) ist: 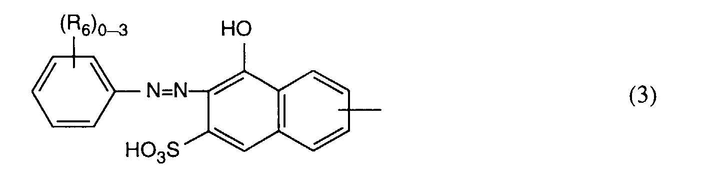 worin R₆ für 0 bis 3 Substituenten aus der Gruppe C₁-C₄-Alkyl, C₁-C₄-Alkoxy, Halogen, Carboxy und Sulfo steht. 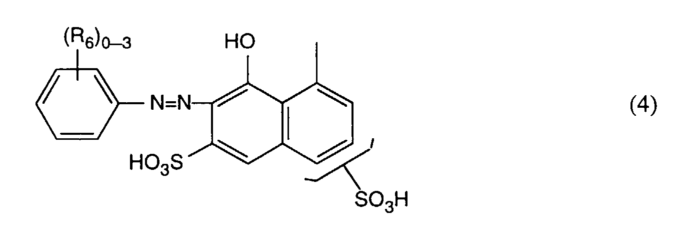 worin R₆ für 0 bis 3 Substituenten aus der Gruppe C₁-C₄-Alkyl, C₁-C₄-Alkoxy, Halogen, Carboxy und Sulfo steht. 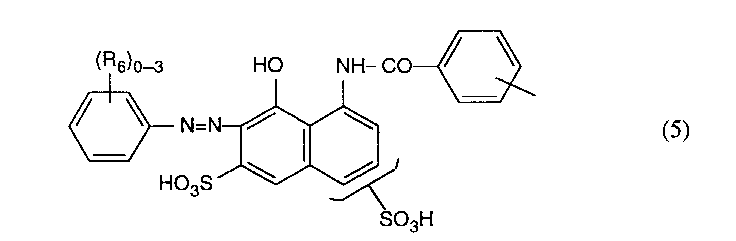 worin R₆ für 0 bis 3 Substituenten aus der Gruppe C₁-C₄-Alkyl, C₁-C₄-Alkoxy, Halogen, Carboxy und Sulfo steht. 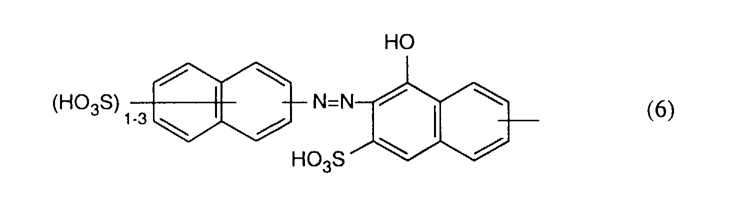 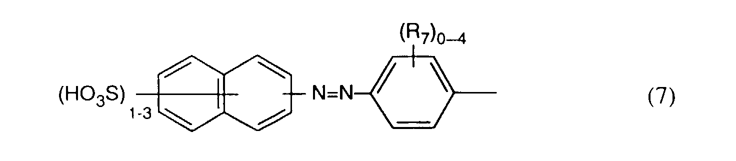 worin R₇ für 0 bis 4 Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo unabhängig voneinander, steht. 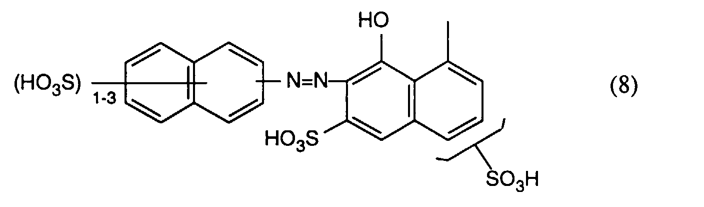 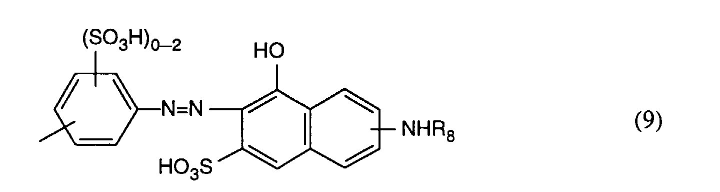 worin R₈ C₁-C₄-Alkanoyl oder Benzoyl ist. 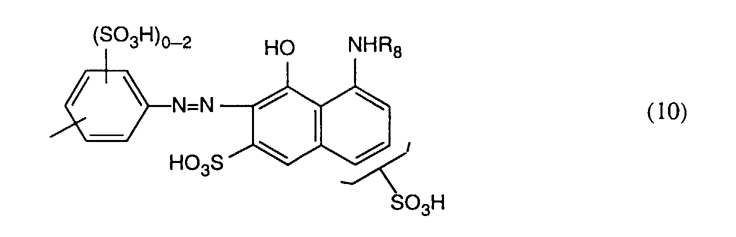 worin R₈ C₁-C₄-Alkanoyl oder Benzoyl ist. 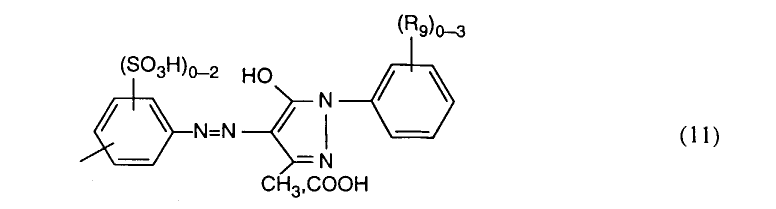 worin R₉ für 0 bis 3 Substituenten aus der Gruppe C₁-C₄-Alkyl, C₁-C₄-Alkoxy, Halogen, Carboxy und Sulfo steht. 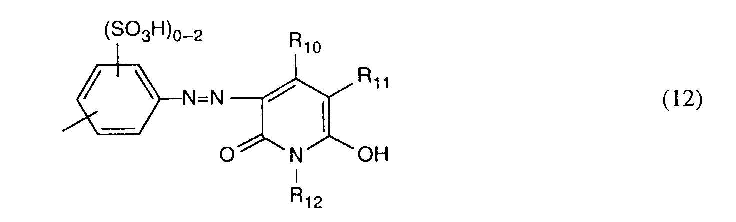 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 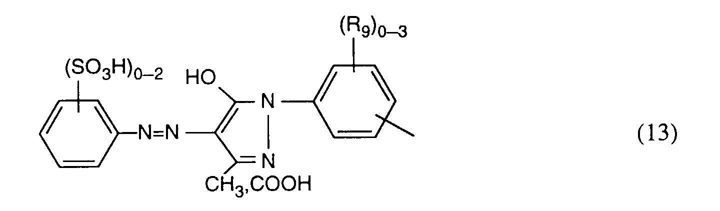 worin R₉ für 0 bis 3 Substituenten aus der Gruppe C₁-C₄-Alkyl, C₁-C₄-Alkoxy, Halogen, Carboxy und Sulfo steht. 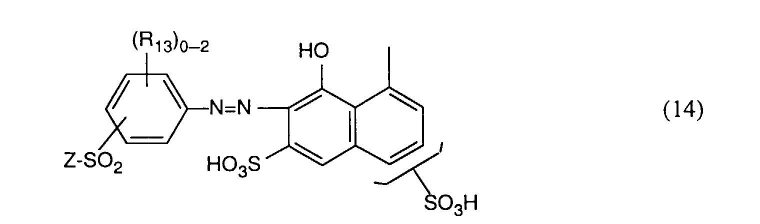 worin R₁₃ für 0 bis 2 Substituenten aus der Gruppe C₁-C₄-Alkyl, C₁-C₄-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist. 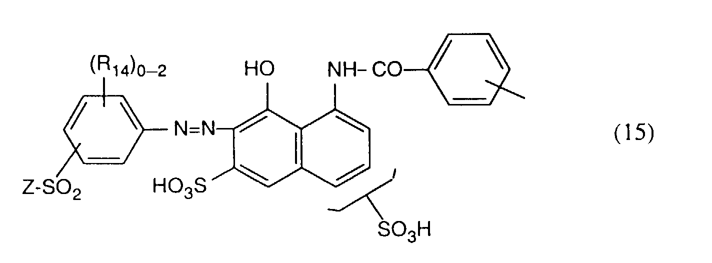 worin R₁₄ für 0 bis 2 Substituenten aus der Gruppe C₁-C₄-Alkyl, C₁-C₄-Alkoxy, Halogen, Carboxy und Sulfo steht; und Z β-Sulfatoäthyl, β-Thiosulfatoäthyl, β-Phosphatoäthyl, β-Acyloxyäthyl, β-Halogenäthyl oder Vinyl ist.

Besonders wichtig sind ausserdem Schwermetallkomplexe von Reaktivfarbstoffen der Formel (1); als komplexbildende Schwermetalle kommen vor allem Kupfer, Nickel, Kobalt oder Chrom in Betracht. Bevorzugt sind Kupferkomplexazofarbstoffe, insbesondere solche der Formeln (3) bis (13), die das Kupferatom über ein Sauerstoffatom je in ortho-Position zur Azobrücke gebunden enthalten.

Beispiele für Azofarbstoffe, die sich als Metallkomplexe eignen, sind:

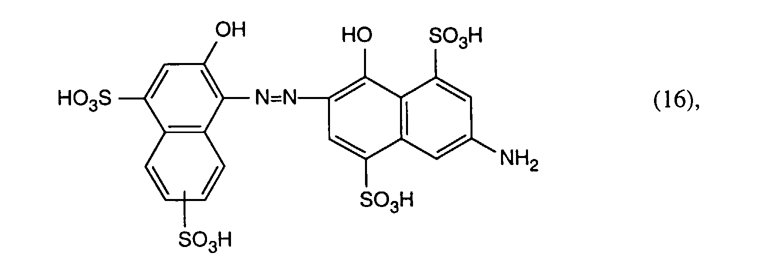

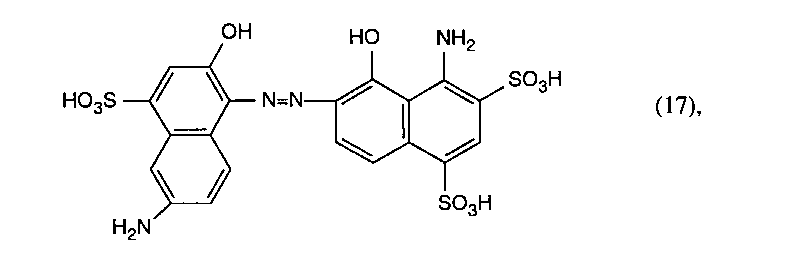

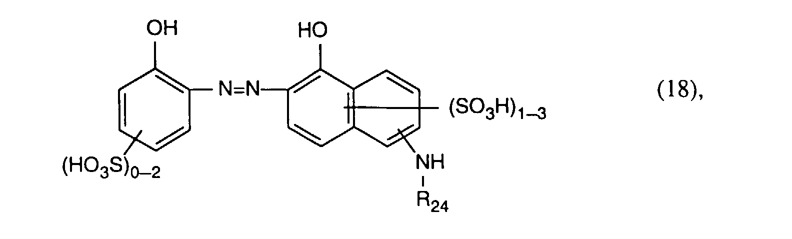

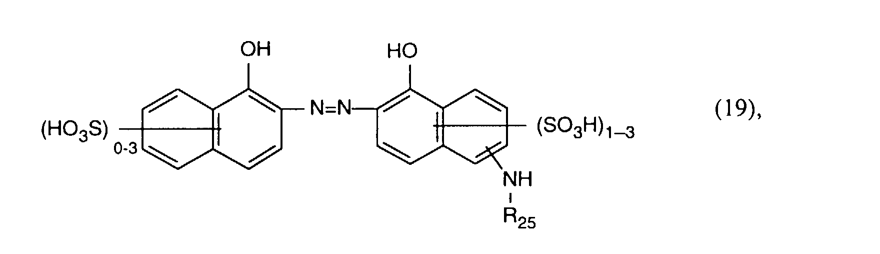

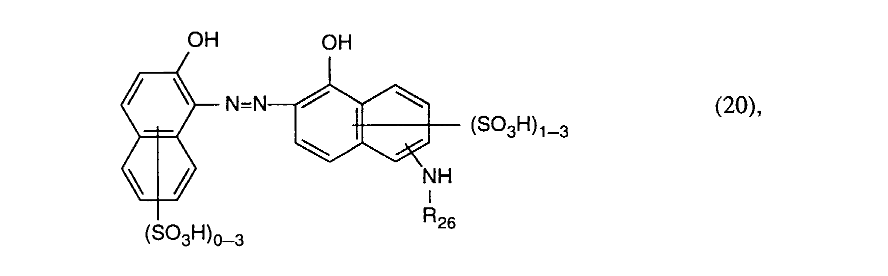

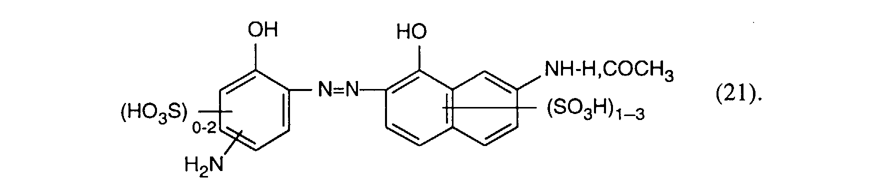

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

Bevorzugt sind Kupferkomplexe wie z.B.

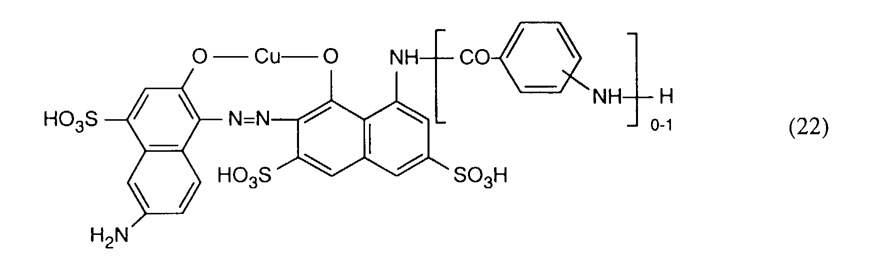

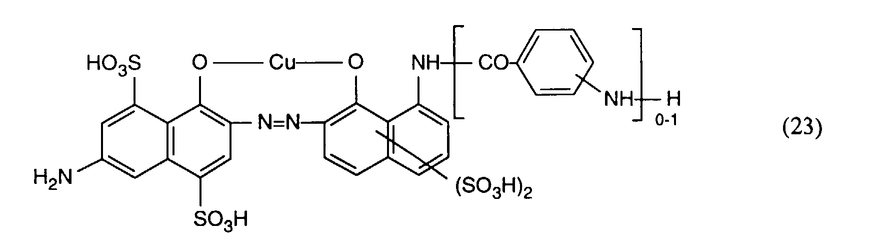

In den oben aufgeführten Formeln bedeuten die Reste R₂₄ bis R₂₆ Wasserstoff oder C₁-C₄-Alkyl. Vorzugsweise bedeuten die Reste R₂₄ bis R₂₆ Wasserstoff, Methyl oder Aethyl. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor. Vorzugsweise sind die Benzolringe nicht weitersubstituiert.

Die Reaktivfarbstoffe der Formeln (1) und (2) sind an sich bekannt oder können hergestellt werden, indem man ein oder zwei Aequivalente eines organischen Farbstoff der Formel 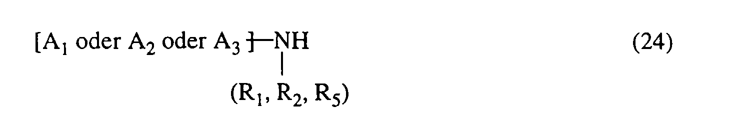 oder ein Farbstoffvorprodukt, mindestens ein Aequivalent eines s-Triazins, mindestens ein Aequivalent eines Diamins der Formel 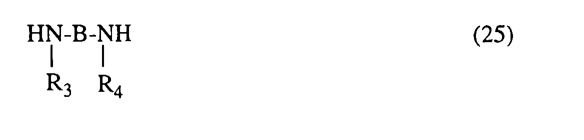 bzw. der Formel 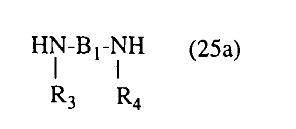 oder ein Aequivalent eines Amins der Formel 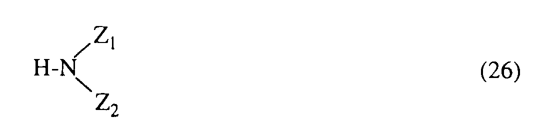 in beliebiger Reihenfolge miteinander umsetzt, wobei A₁, A₂, A₃, R₁, R₂, R₃, R₄, R₅, B, Z₁ und Z₂ die unter den Formeln (1) und (2) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (25) dem Triazin und dem Farbstoff der Formel (24) oder einem Vorprodukt zweckmässigerweise zuerst ausgeführt wird, die des Triazins mit der Verbindung der Formel (25) oder mit dem Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Im folgenden sollen mögliche Ausgangsstoffe, die zur Herstellung der Reaktivfarbstoffe der Formeln (1) und (2) verwendet werden können, einzeln genannt werden.

Farbstoffe der Formel (24)

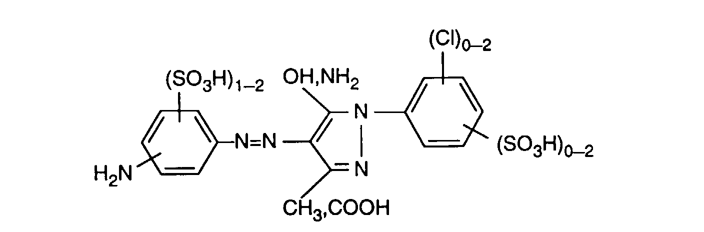

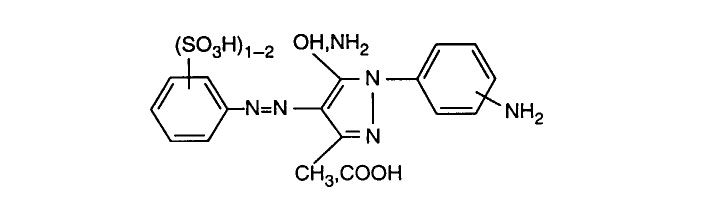

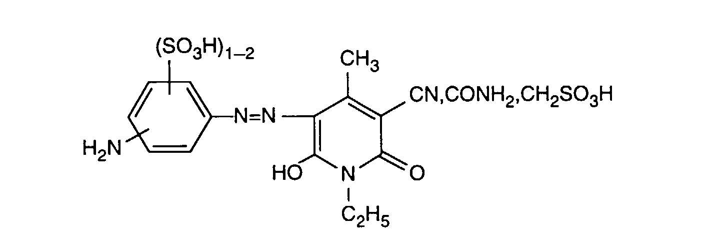

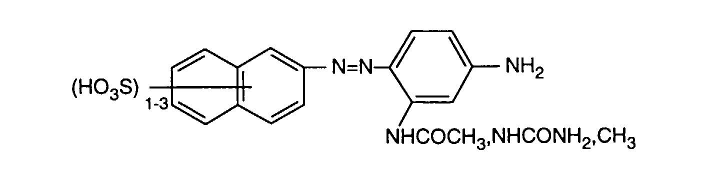

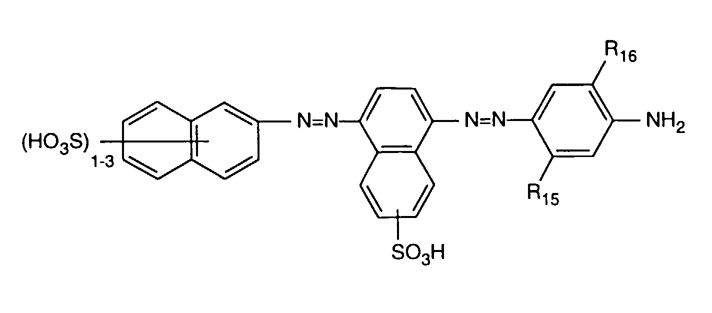

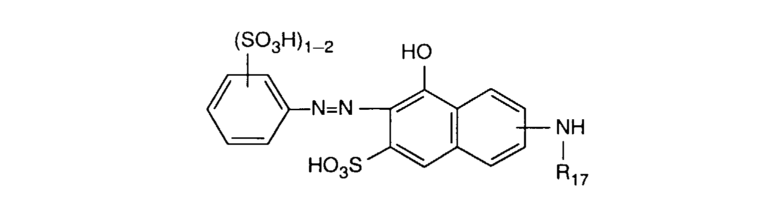

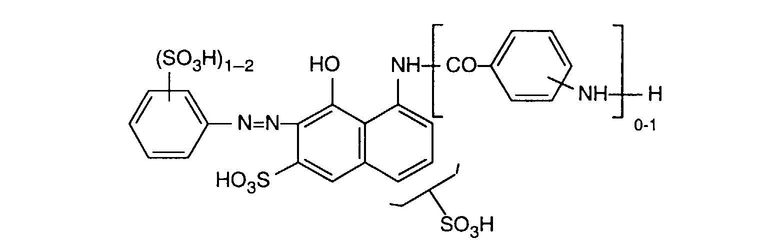

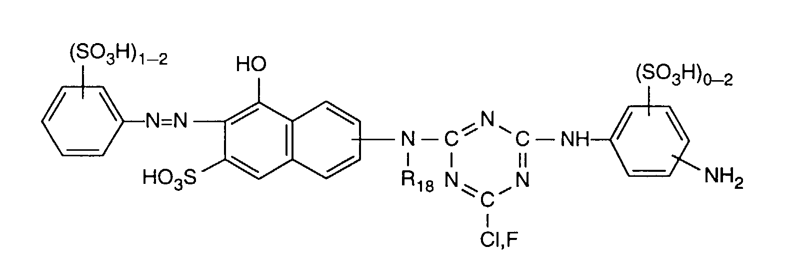

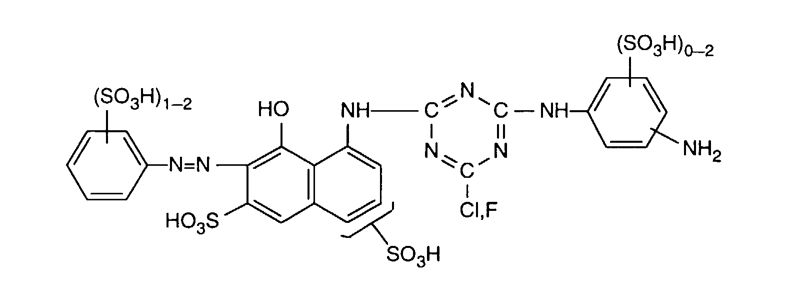

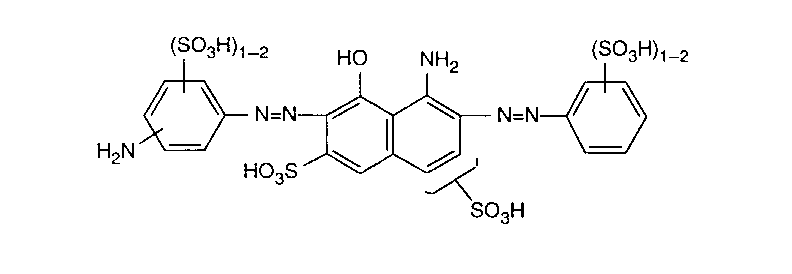

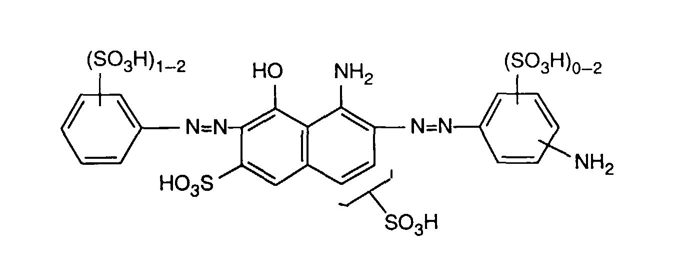

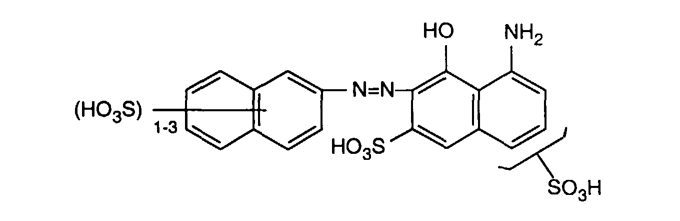

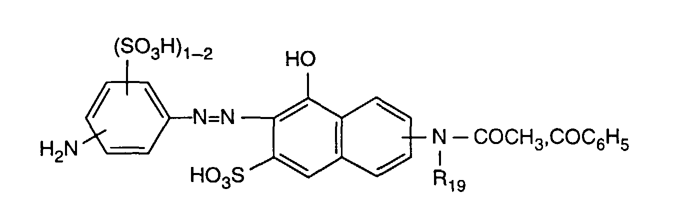

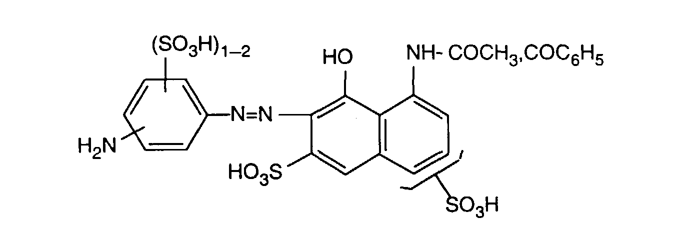

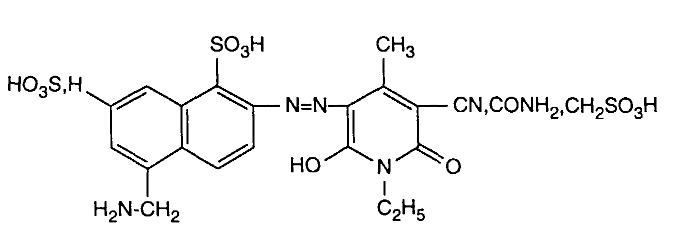

Metallkomplexe von Farbstoffen der Formeln:

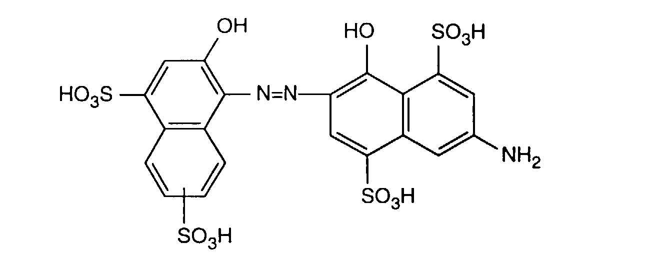

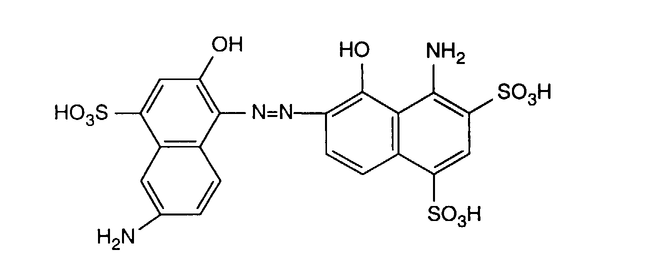

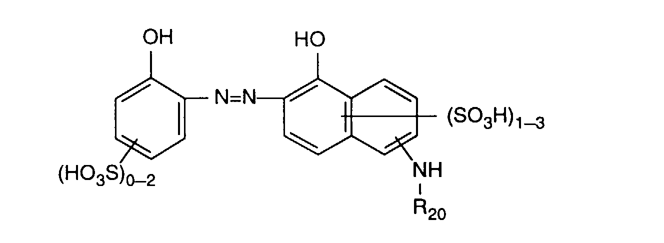

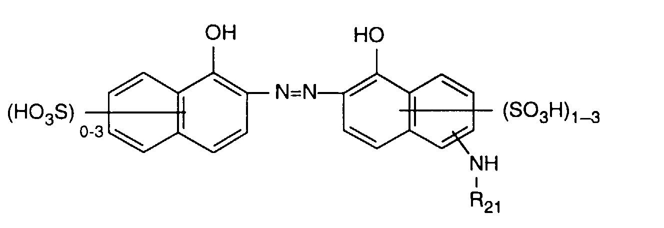

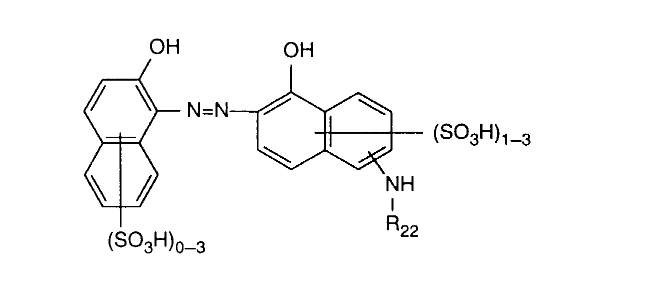

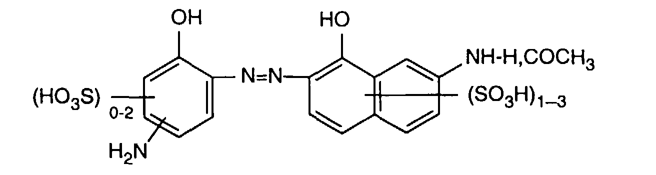

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Liganden unsymmetrisch aufgebaut sein.

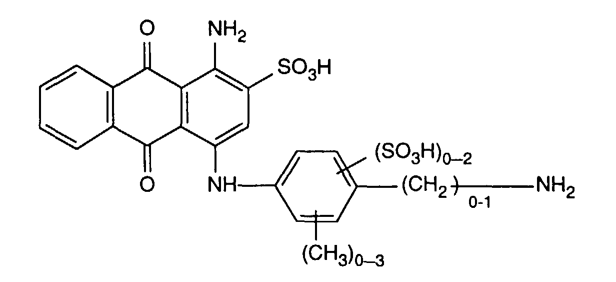

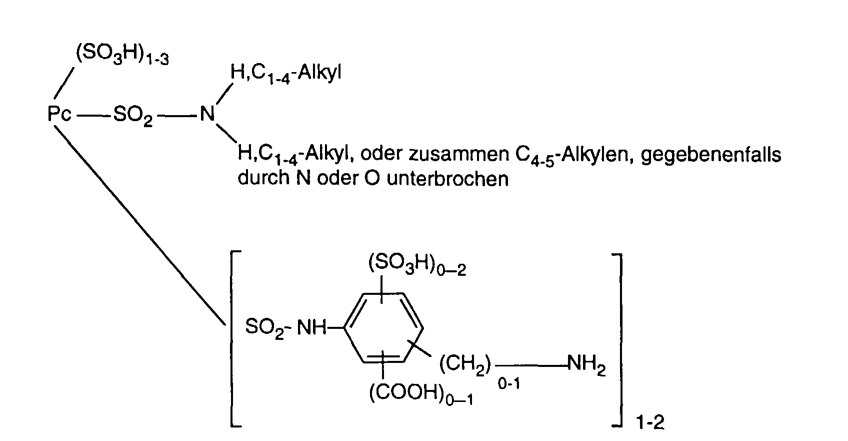

In dieser Formel steht Pc für den Cu- oder Ni-Phthalocyaninrest, die Gesamtzahl der Substituenten am Pc-Gerüst ist 4.

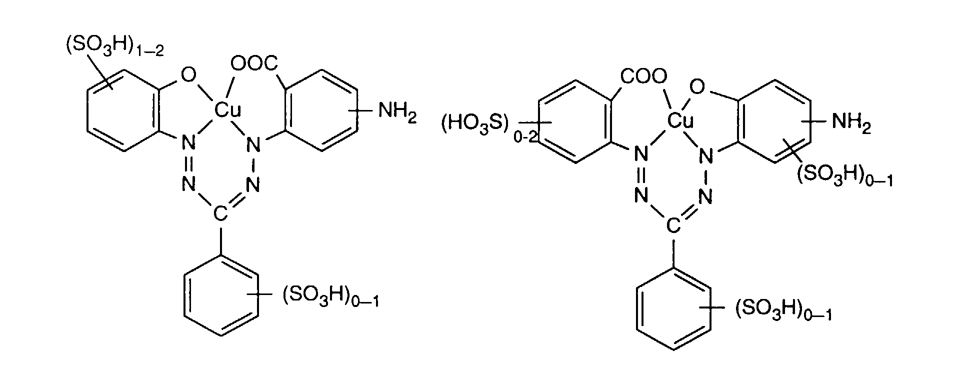

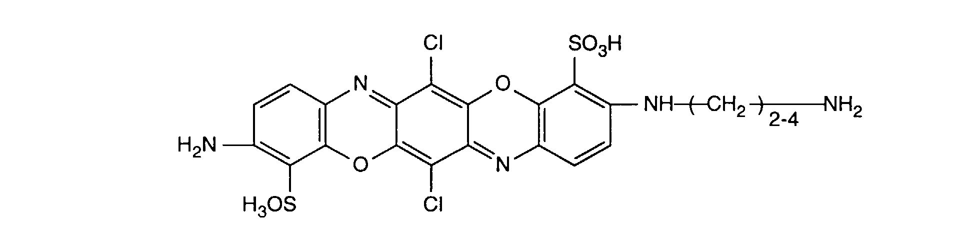

In den oben aufgeführten Formeln bedeuten die Reste R₁₇ bis R₂₂ Wasserstoff oder C₁-C₄-Alkyl, und die Reste R₁₅ und R₁₆ Wasserstoff, C₁-C₄-Alkyl, C₁-C₄-Alkoxy, C₁-C₄-Alkanoylamino, Ureido oder Halogen, wobei die Reste R₁₅ und R₁₆, die zu ein und derselben Formel gehören, voneinander unabhängig sind. Vorzugsweise bedeuten die Reste R₁₇ bis R₂₂ Wasserstoff, Methyl oder Aethyl, und die Reste R₁₅ und R₁₆ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Aethyl, Methoxy, Aethoxy, Methylsulfonyl, Aethylsulfonyl, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert.

### Als Triazine seien genannt:

2,4,6-Trifluor-s-triazin (Cyanurfluorid), 2,4,6-Trichlor-s-triazin (Cyanurchlorid), 2,4,6-Tribrom-s-triazin (Cyanurbromid), 2,4,6-Trisulfo-s-triazin.

### Diamine der Formel (25)

4-Aminomethyl-3-sulfoanilin, 4-Aminomethyl-2-sulfoanilin, 1,2- oder 1,3- oder 1,4-Diaminobenzol.

### Amine der Formel (26)

Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-(Acetylamino)äthylamin, β-Sulfatoäthylamin, Benzylamin, Phenäthylamin, Cyclohexylamin, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyäthylaminobenzol, N-β-Chloräthylaminobenzol, N-β-Cyanäthylaminobenzol, N-β-Sulfoäthylaminobenzol, 1-(N-Aethylamino)-2-3- oder -4-methylbenzol, 1-(N-Aethylamino)-2-, -3- oder -4-äthylbenzol, 1-(N-Aethylamino)-2-, -3- oder -4-chlorbenzol, 1-N-Aethylaminobenzol-3- oder -4-sulfonsäure, 1-(N-Aethylamino)-4-butylbenzol, 1-(N-Aethylamino)-4-hexylbenzol, 1-(N-Aethylamino)-4-octylbenzol, 1-(N-Aethylamino)-4-vinylbenzol, 1-N-n-Butylamino-3-methylbenzol, 1-(N-Aethylamino)-4-fluorbenzol, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Aethoxy-5-methoxyanilin, 4-Bromanilin, 3-Aminobenzamid, 4-Aminophenylsulfamid, 3-Trifluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methan-sulfonsäure, 2-Aminotoluol-4-sulfonsäure, 2-Aminotoluol-5-sulfonsäure, p-Aminosalicyclsäure, 1 -Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamino-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen hergestellt werden.

Gegenstand der Erfindung ist ferner ein Verfahren zum Färben und Bedrucken von cellulosehaltigen Fasermaterialien mit Farbstoffmischungen, die Reaktivfarbstoffe der Formeln (1) und (2) enthalten. Als Fasermaterialien kommen beispielsweise die natürlichen Cellulosefasern, wie Baumwolle, Leinen und Hanf, sowie Zellstoff und regenerierte Cellulose in Betracht. Die Farbstoffmischungen sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Die Farbstoffmischungen zeichnen sich durch ein gutes Fixiervermögen und ein sehr gutes Aufbauvermögen aus. Sie können nach dem Ausziehverfahren über einen sehr grossen Temperaturbereich eingesetzt werden und eignen sich deshalb auch sehr gut zum Färben von Baumwolle-Polyester-Mischgeweben nach den für solche Gewebe empfohlenen Bedingungen. Die Fixiergrade sind hoch, und die Differenz zwischen Ausziehgrad und Fixiergrad ist bemerkenswert klein, d.h. der Seifverlust sehr gering. Die Farbstoffmischungen der Reaktivfarbstoffe der Formeln (1) und (2) eignen sich auch zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffmischungen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit und eine sehr gute Chlorbadewasserechtheit.

Die Farbstoffe der Formeln (1) und (2) liegen entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht beschrieben, sie ergibt sich jedoch ohne weiteres aus der allgemeinen Beschreibung.

### Beispiel 1 (Erläuterungsbeispiel, außerhalb der Ansprüche)

Zur Herstellung der Farbstoffmischungen, die einen Farbstoff der Formel 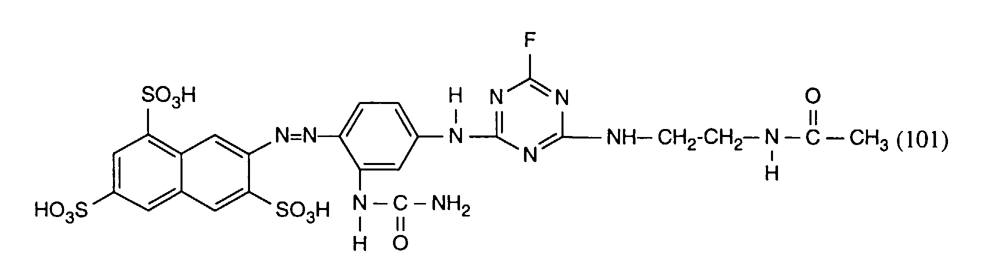 und einen Farbstoff der Formel (102) enthält, werden in einem Mixer 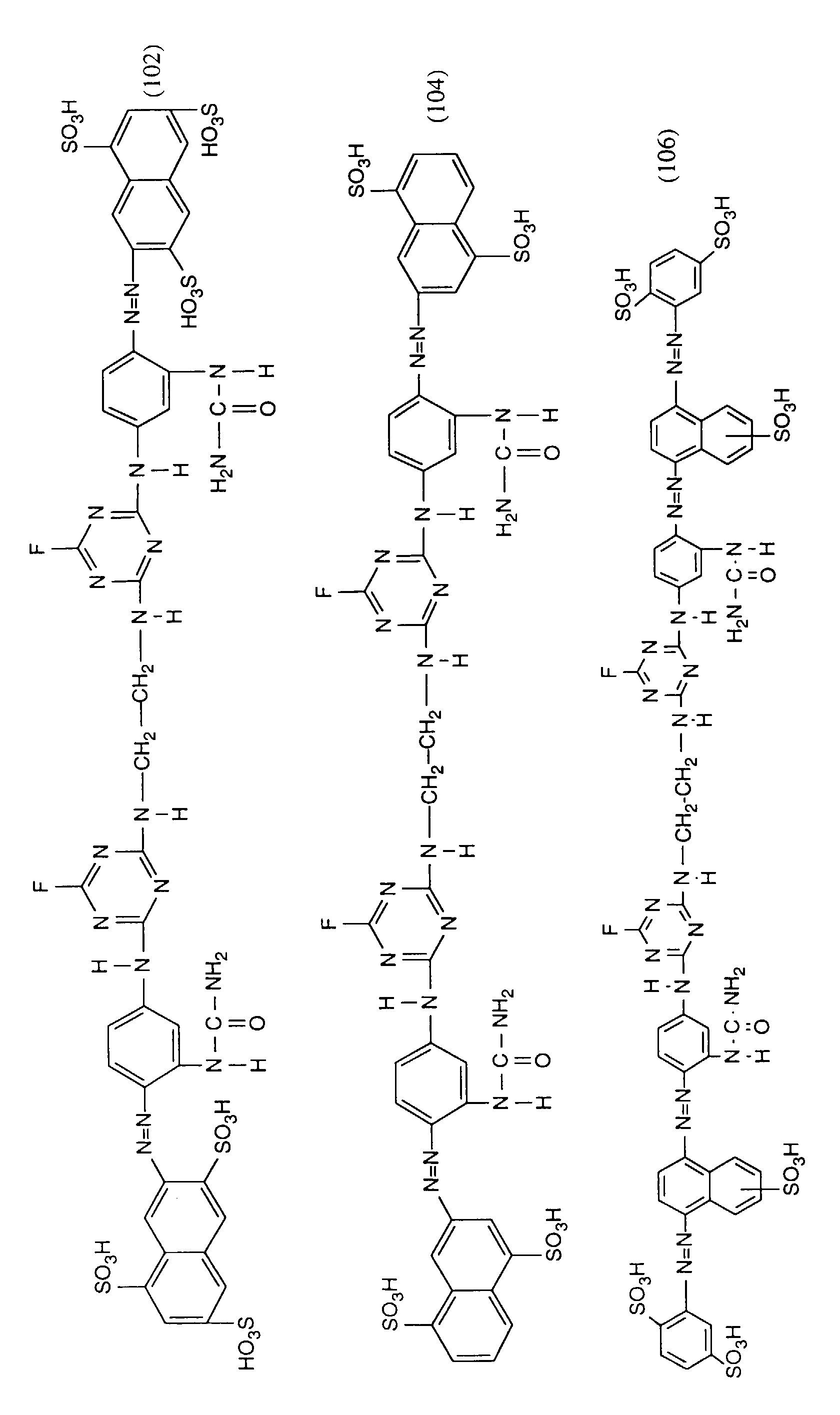
a₁) 40 Teile des Farbstoffs der Formel (101) und 60 Teile des Farbstoffs der Formel (102) homogen gemischt und ergeben 100 Teile der Mischung, die im folgenden als Farbstoffmischung A₁ bezeichnet wird;
a₂) 5 Teile des Farbstoffs der Formel (101) und 95 Teile des Farbstoffs der Formel (102) homogen gemischt und ergeben 100 Teile der Mischung, die im folgenden als Farbstoffmischung A₂ bezeichnet wird;
a₃) 10 Teile des Farbstoffs der Formel (101) und 90 Teile des Farbstoffs der Formel (102) homogen gemischt und ergeben 100 Teile der Mischung, die im folgenden als Farbstoffmischung A₃ bezeichnet wird;
   zur Herstellung der Farbstoffmischung, die den Farbstoff der Formel 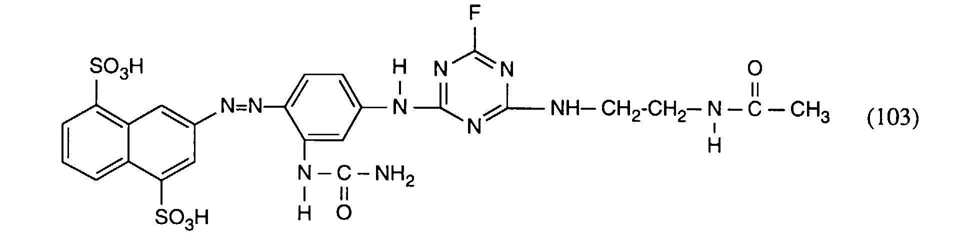 und den Farbstoff der Formel (104) enthält, werden in einem Mixer
b) 20 Teile des Farbstoffs der Formel (103) und 80 Teile des Farbstoffs der Formel (104) homogen gemischt;
   zur Herstellung der Farbstoffmischung, die den Farbstoff der Formel 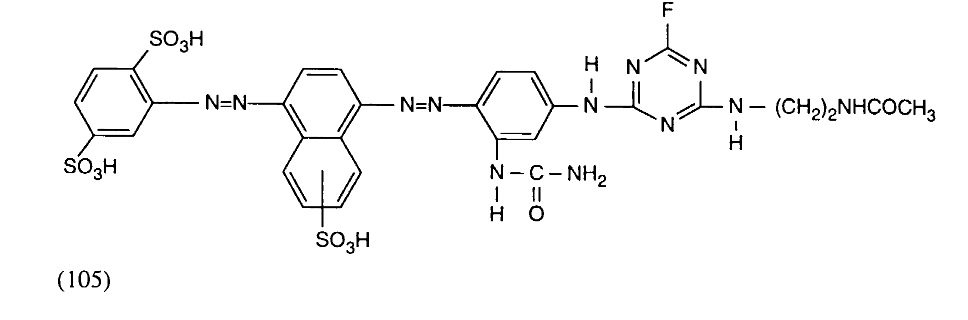 und den Farbstoff der Formel (106) enthält, werden in einem Mixer
c) 20 Teile des Farbstoffs der Formel (105) und 80 Teile des Farbstoffs der Formel (106) homogen gemischt;
   zur Herstellung der Farbstoffmischung, die den Farbstoff der Formel 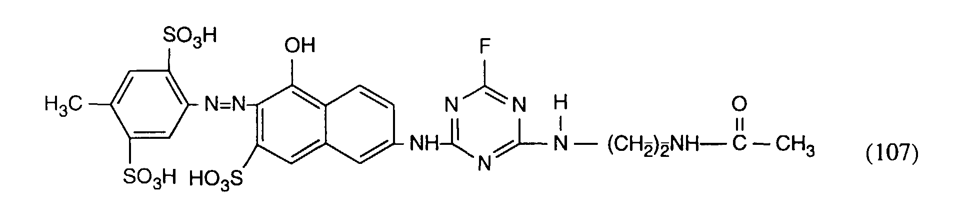 und den Farbstoff der Formel 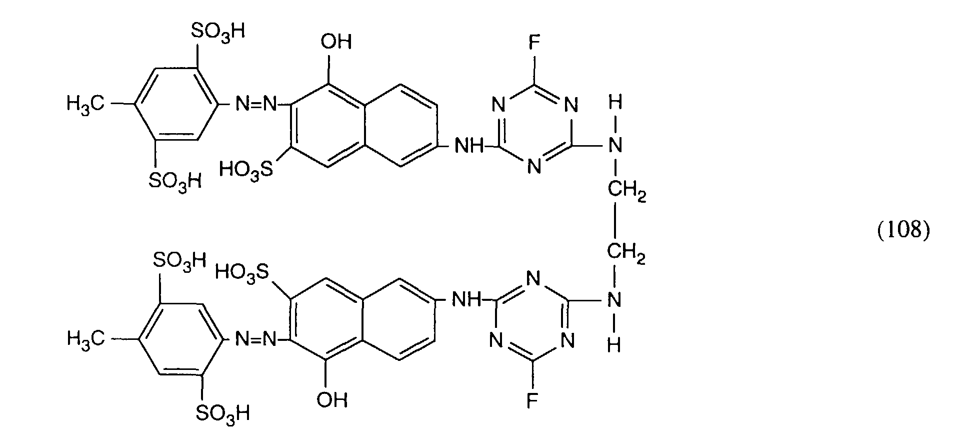 enthält, werden in einem Mixer
d) 20 Teile des Farbstoffs der Formel (107) und 80 Teile des Farbstoffs der Formel (108) homogen gemischt und ergeben 100 Teile der Mischung, die im folgenden als Farbstoffmischung D bezeichnet wird;
   zur Herstellung der Farbstoffmischung, die den Farbstoff der Formel 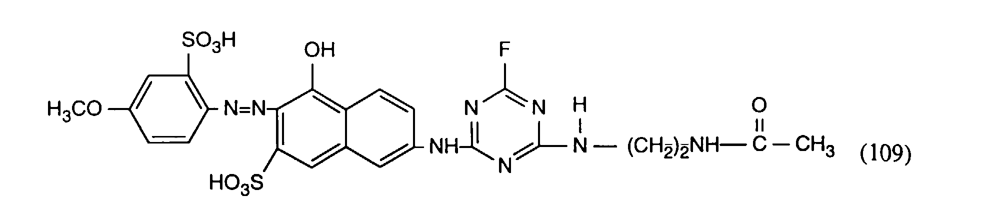 und den Farsbtoff der Formel 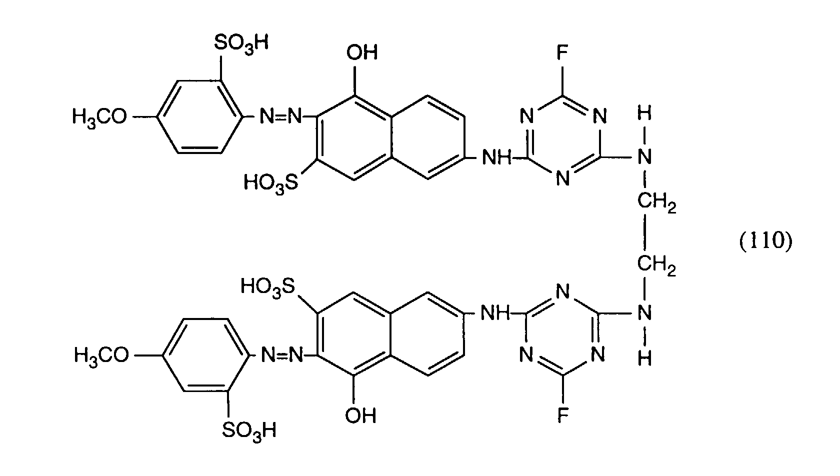 enthält, werden in einem Mixer
e) 20 Teile des Farbstoffs der Formel (109) und 80 Teile des Farbstoffs der Formel (110) homogen gemischt;
   zur Herstellung der Farbstoffmischung, die den Farbstoff der Formel 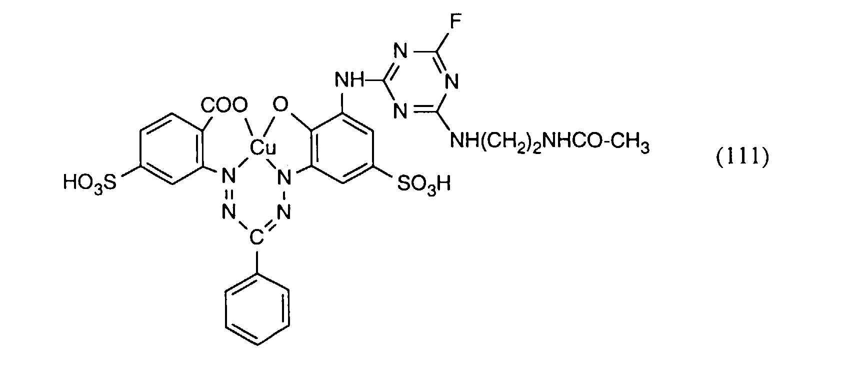 und den Farbstoff der Formel 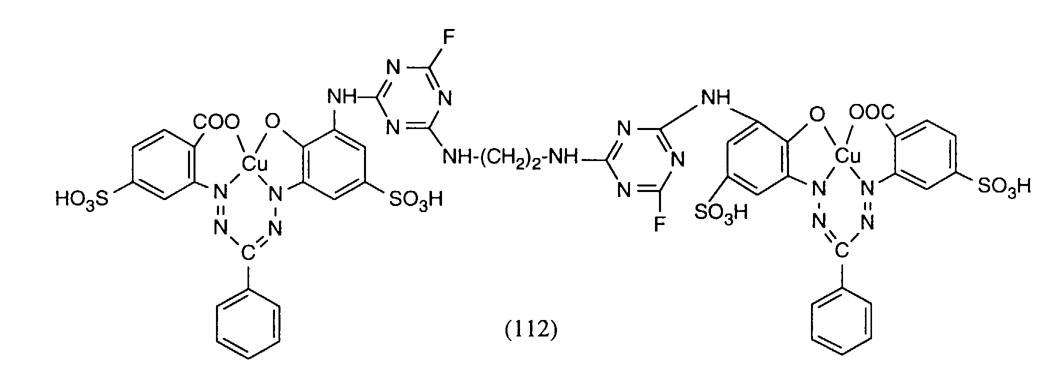 enthält, werden in einem Mixer
f) 30 Teile des Farbstoffs der Formel (111) und 70 Teile des Farbstoffs der Formel (112) homogen gemischt und ergeben 100 Teile der Mischung, die im folgenden als Farbstoffmischung F bezeichnet wird.

### Beispiel 2

27,3 Teile des Farbstoffes der Formel 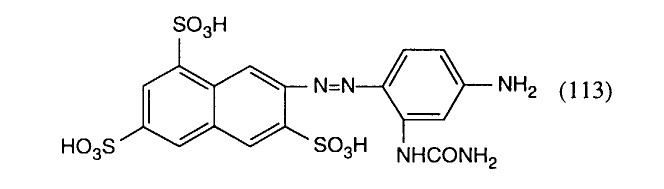 werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 4,5 mit einer wässerigen Lösung, die 1,6 Teile 2,4-Diaminotoluol und 2,2 Teile Morpholin enthält. Der pH-Wert des Reaktionsgemisches wird nun durch Zufügen von Natriumcarbonat auf 7,5 und die Temperatur langsam auf 25° erhöht. Nach beendigter Kondensation wird eine Mischung der Farbstoffe der Formeln 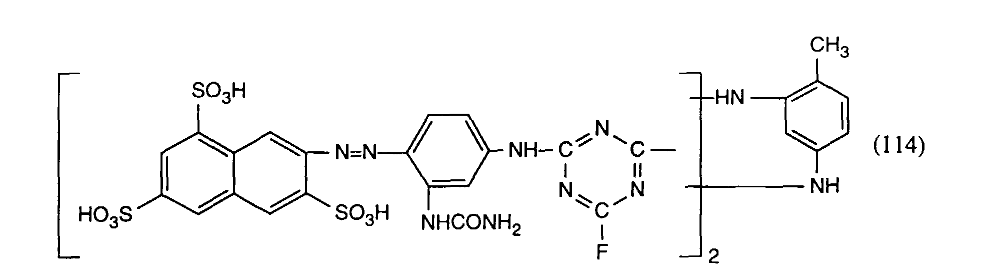 und 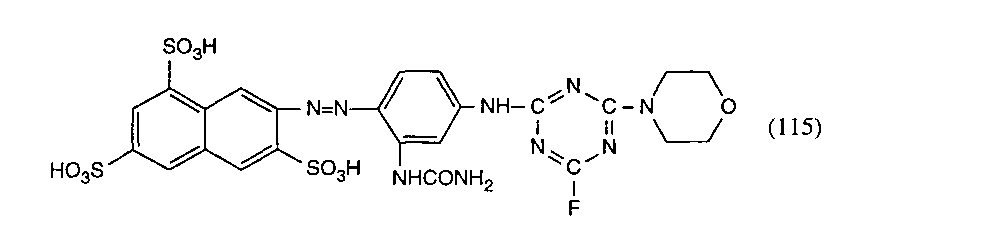 nach Zugabe von Puffersalzen mit Natriumchlorid gefällt, filtriert, gewaschen und getrocknet. Er stellt ein oranges Pulver dar und färbt Baumwolle in goldgelben Tönen.

### Beispiel 3 (Erläuterungsbeispiel, außerhalb der Ansprüche)

27,3 Teile des Farbstoffes der Formel 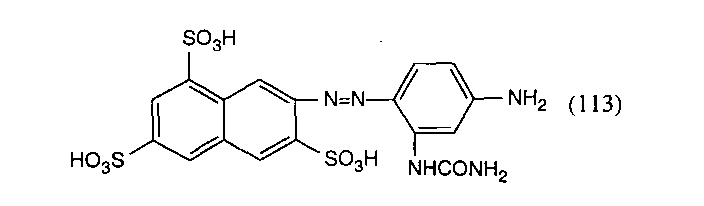 werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5-7 mit 0,75 Teilen Aethylendiamin und 2,2 Teilen Morpholin. Der pH-Wert des Reaktionsgemisches wird nun durch Zufügen von Natriumcarbonat auf 7,5 und die Temperatur langsam auf 25° erhöht. Nach beendigter Kondensation wird eine Mischung der Farbstoffe der Formeln 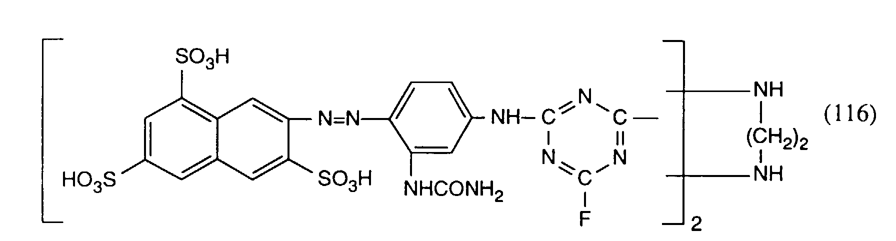 und 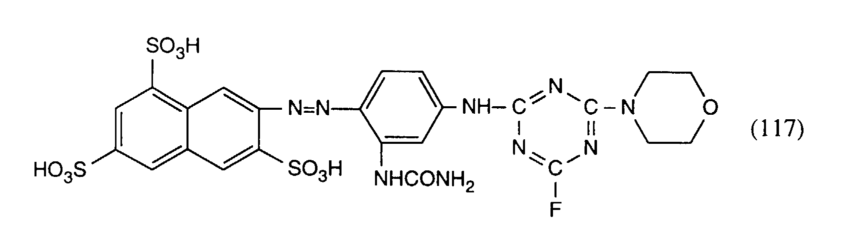 nach Zugabe von Puffersalzen mit Natriumchlorid gefällt, filtriert, gewaschen und getrocknet. Er stellt ein oranges Pulver dar und färbt Baumwolle in goldgelben Tönen.

Werden anstelle von 2,2 Teilen Morpholin 5,8 Teile Metanilsäure, 2,7 Teile o-Toluidin, 2,7 Teile N-Methylanilin oder 3,0 Teile N-Aethylanilin eingesetzt, so erhält man Mischungen des Farbstoffes der Formel 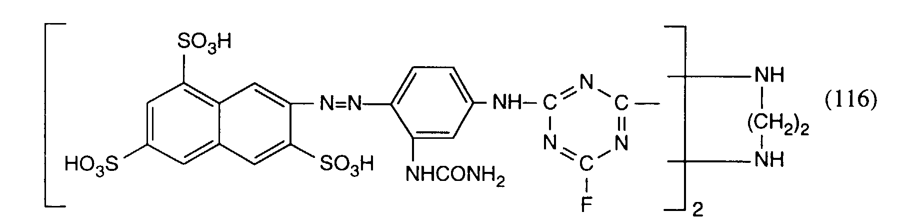 mit einem der Farbstoffe der folgenden Formeln

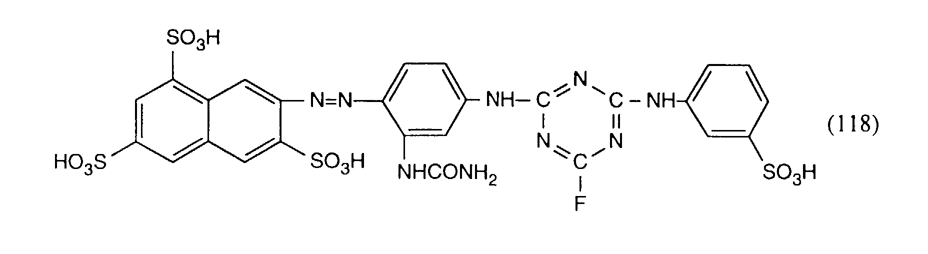

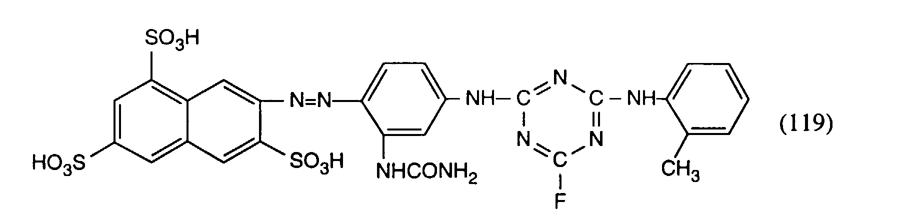

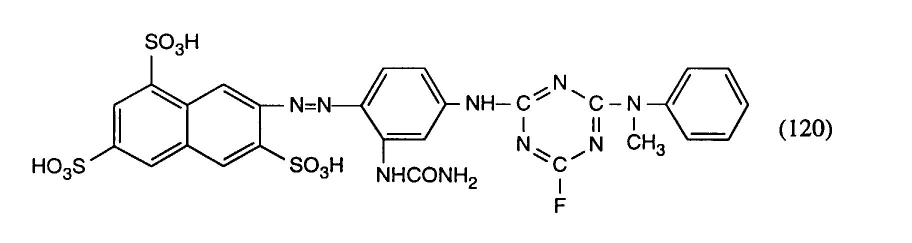

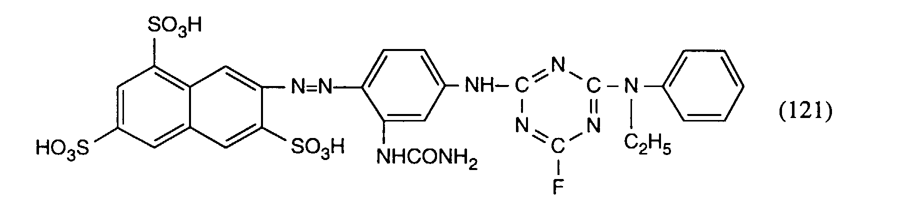

Je nach den Molverhältnissen der eingesetzten Amine bzw. Diamine werden Farbstoffmischungen mit unterschiedlichen Mischungsverhältnissen erhalten.

Anstelle von Aethylendiamin können z.B. die folgenden Diamine verwendet werden: 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethyl-benzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1.4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure.

Verwendet man anstelle des oben angegebenen Chromophors die in der folgenden Tabelle in Spalte I aufgeführten Chromophore und verfährt im übrigen wie in den Beispielen beschrieben, so erhält man weitere Farbstoffmischungen, die Baumwolle in den in Spalte II angegebenen Tönen färben.

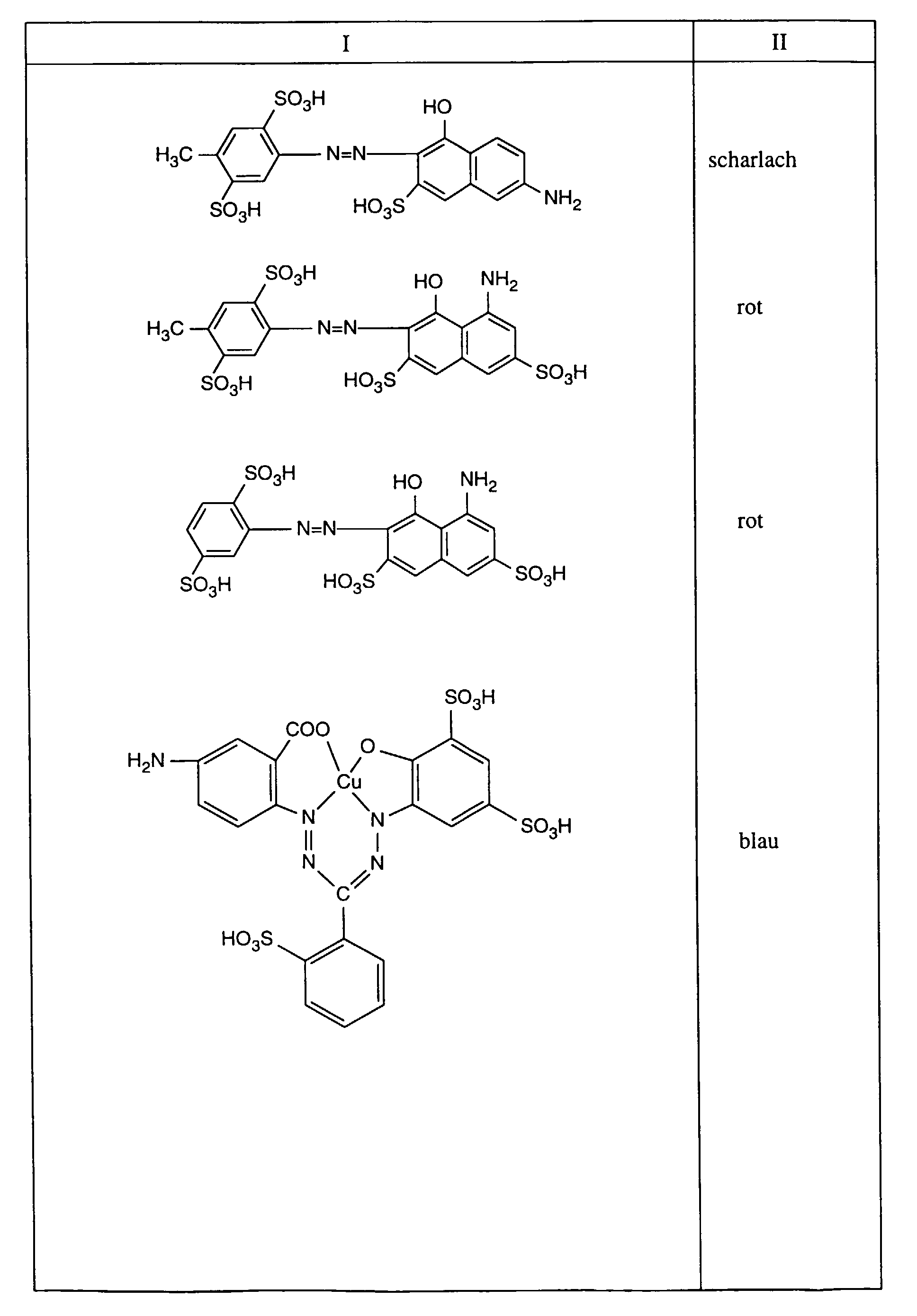

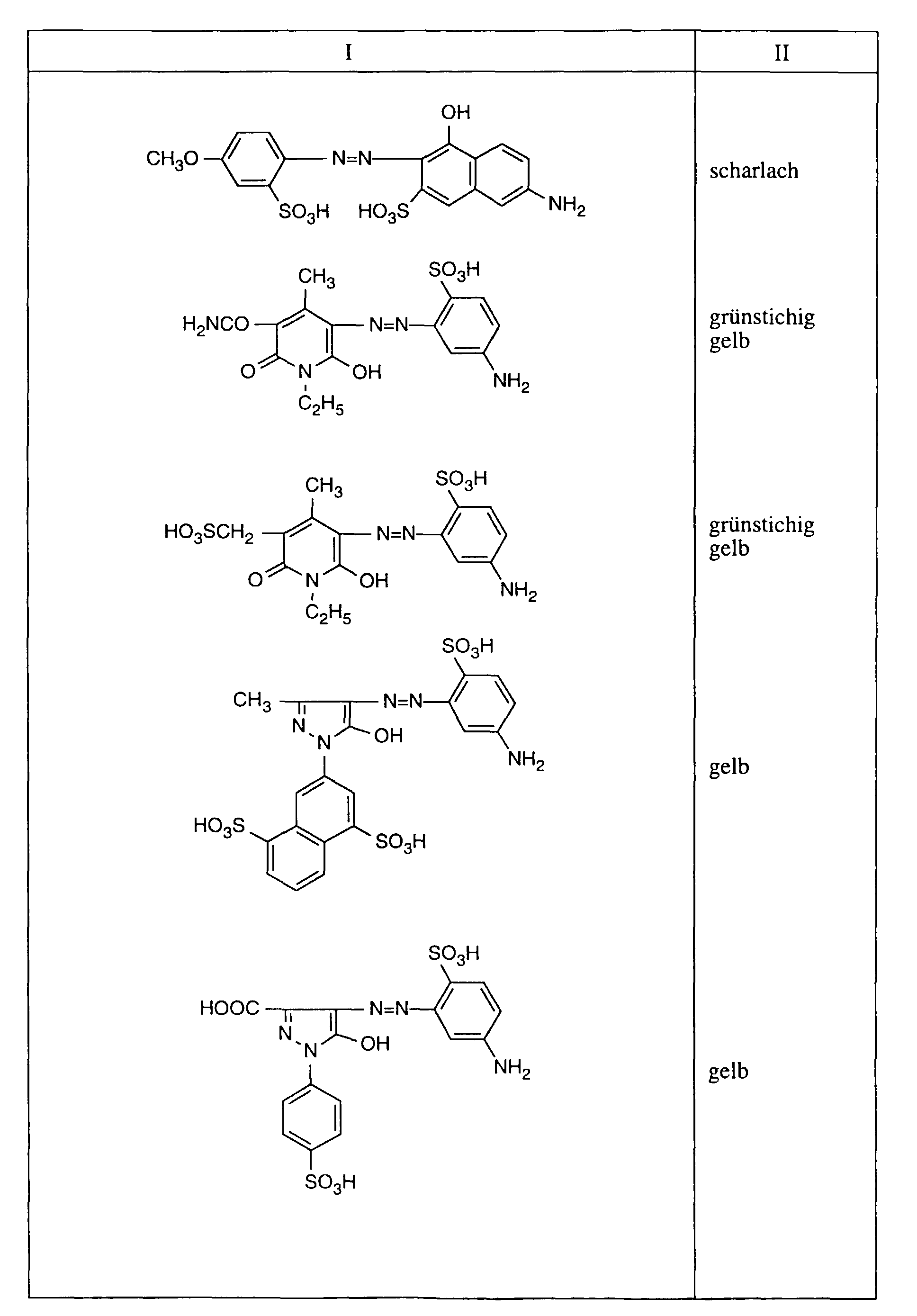

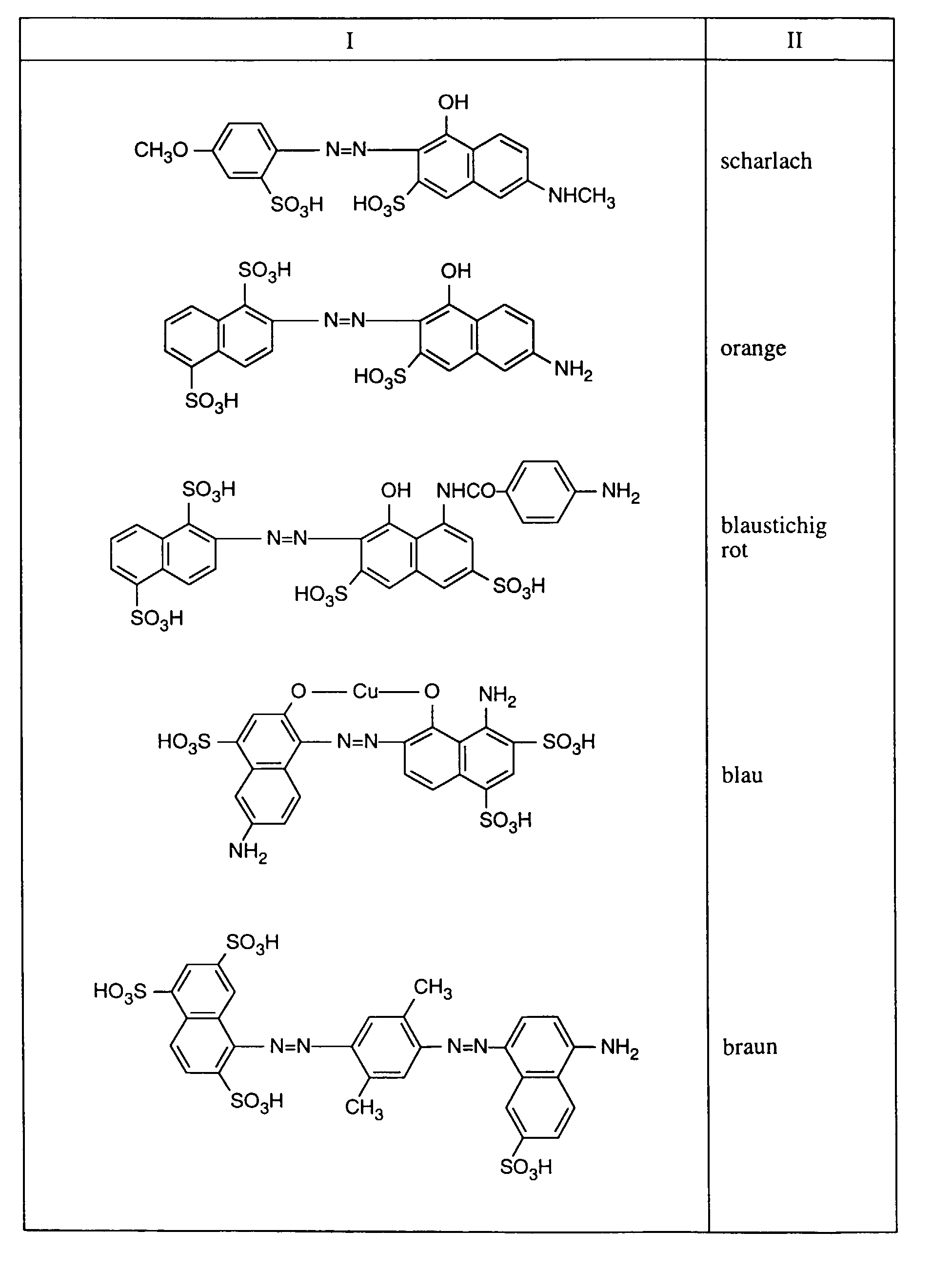

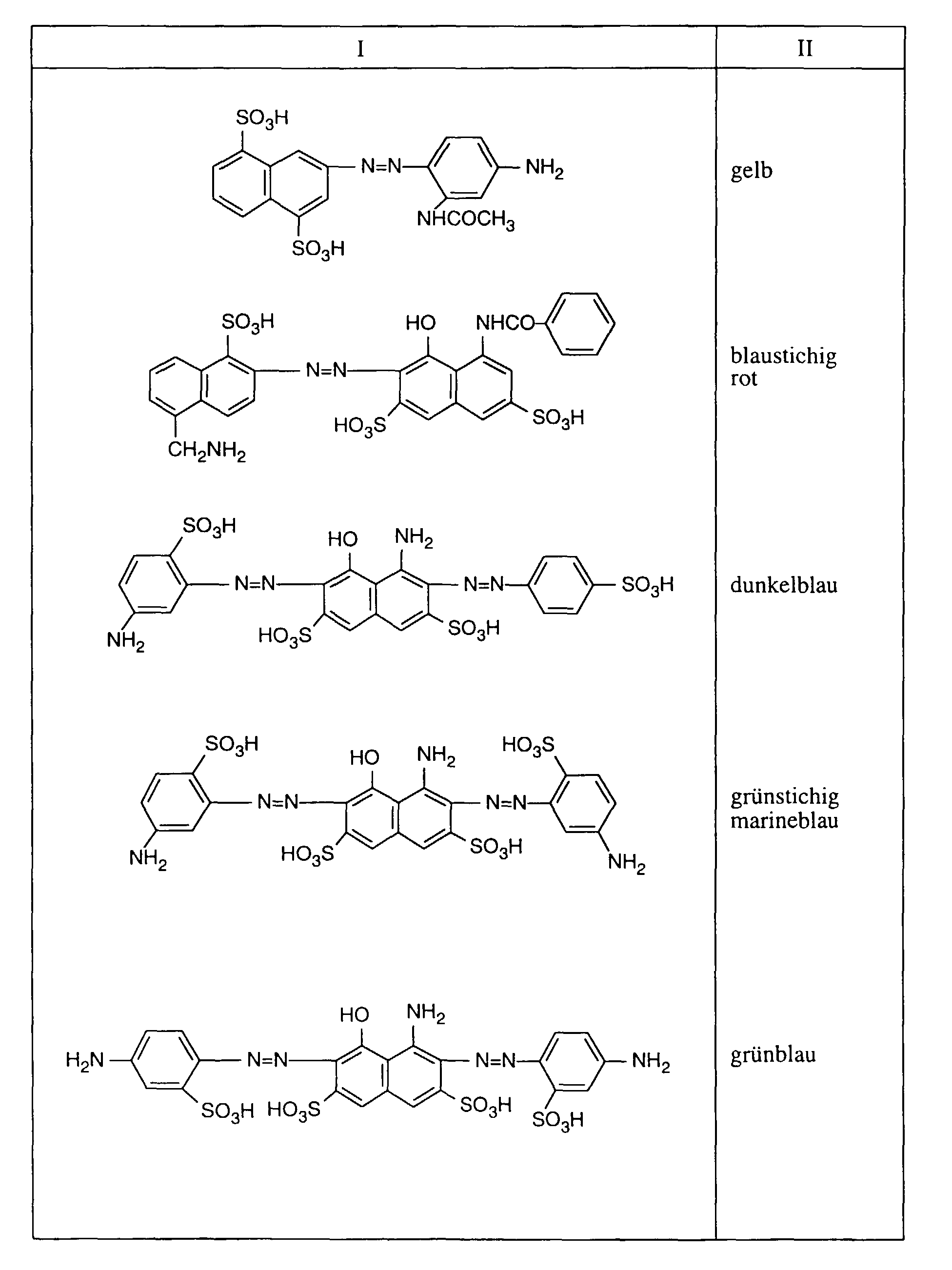

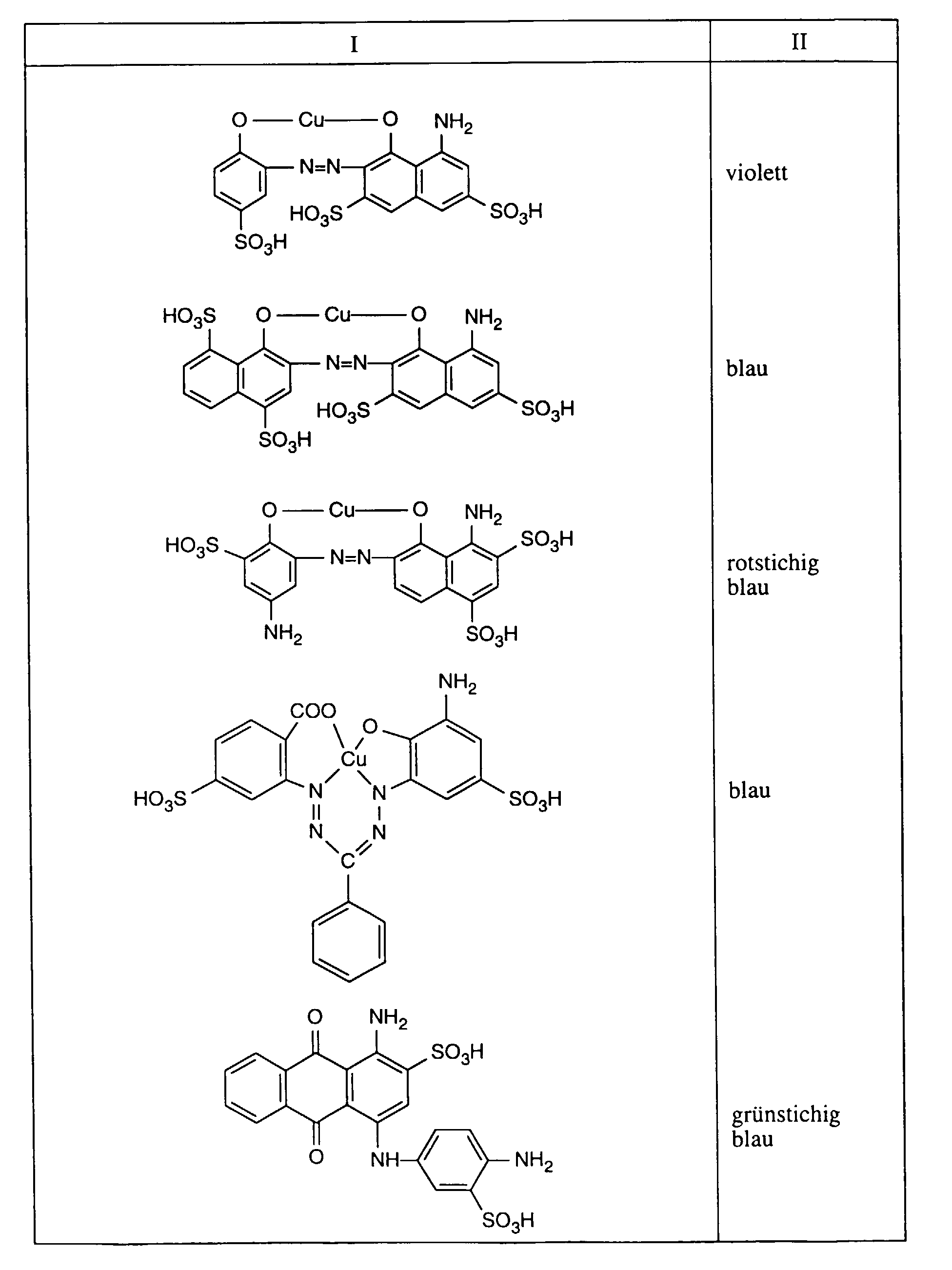

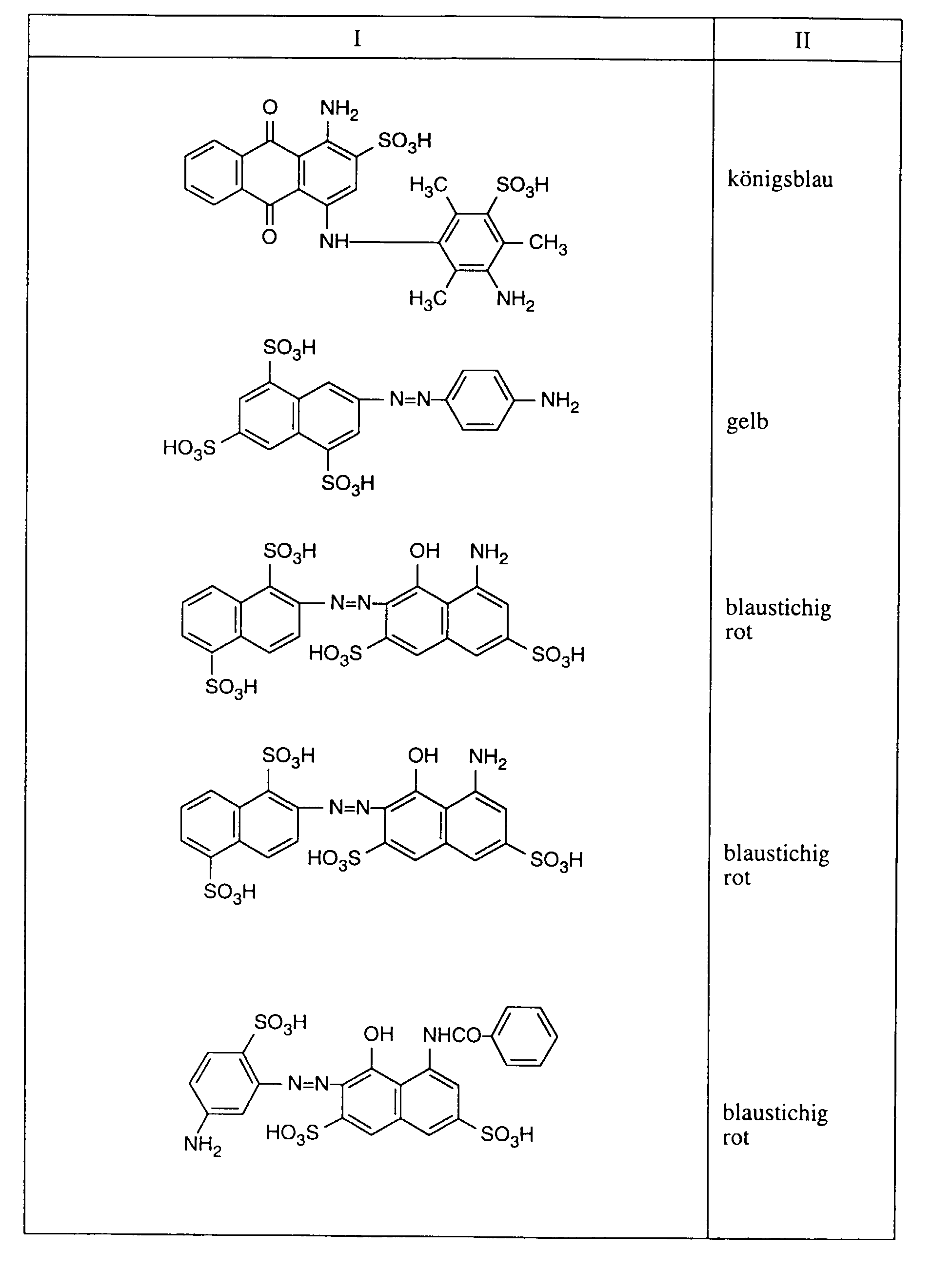

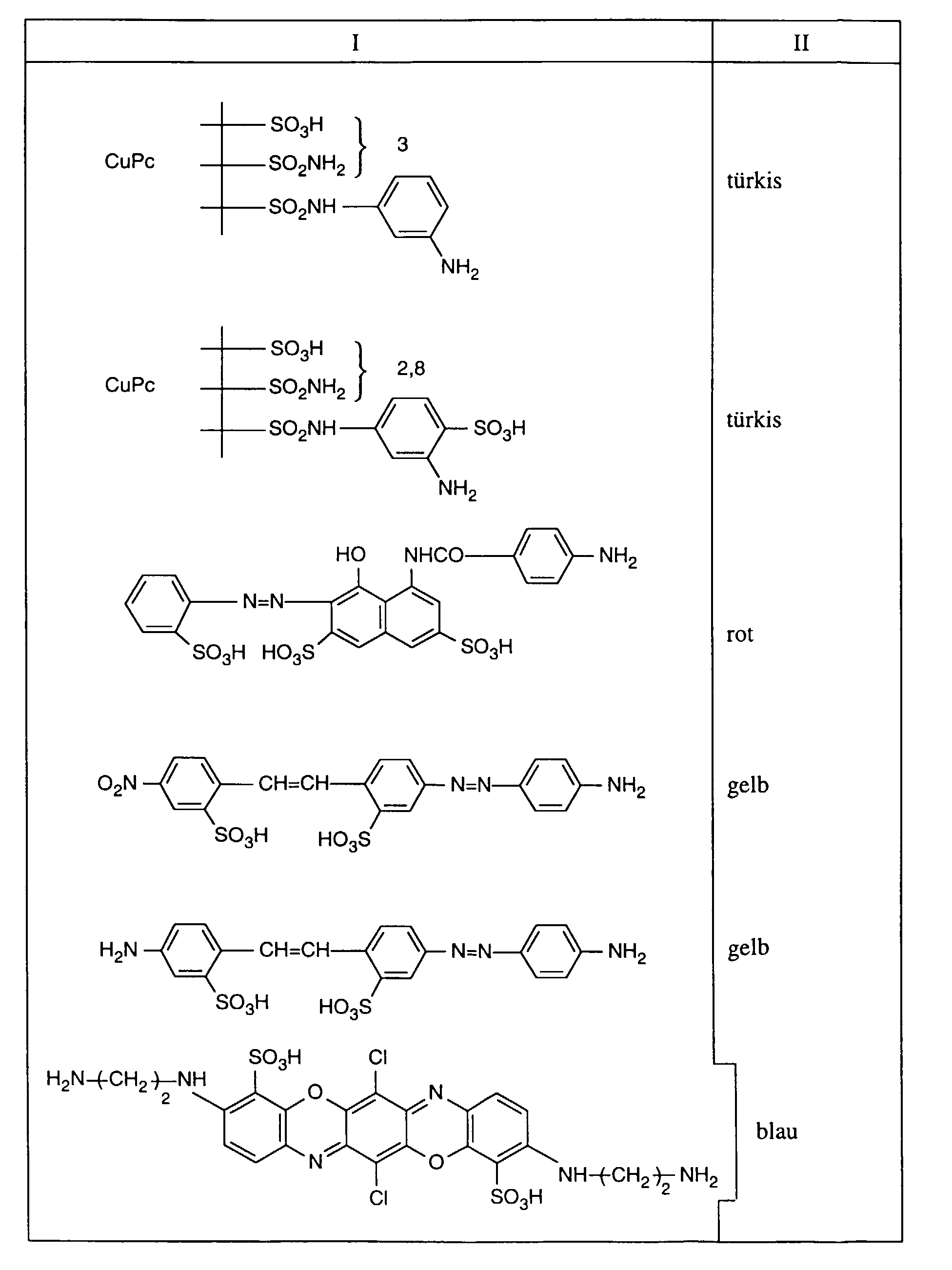

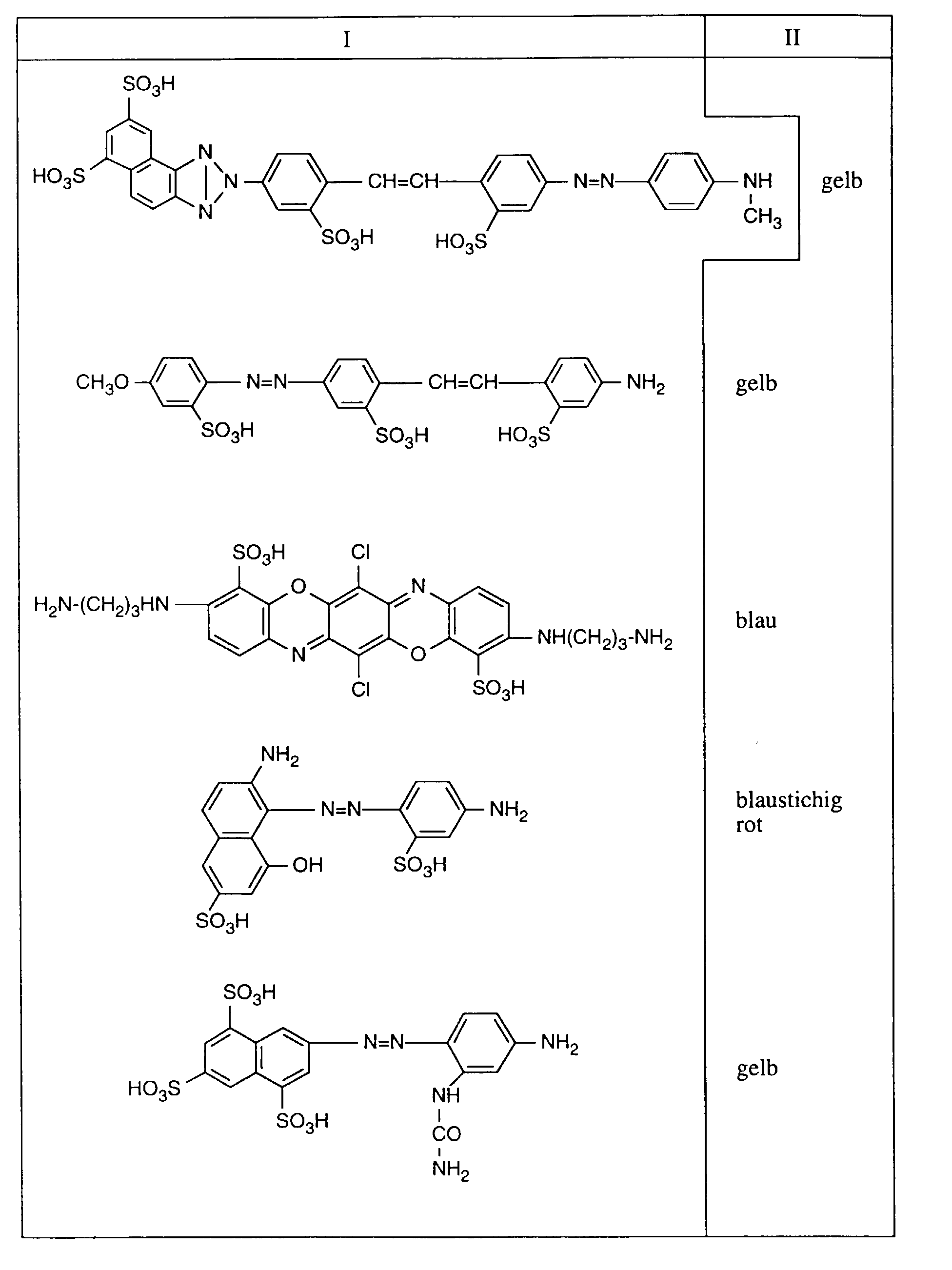

### Beispiel 4 (Erläuterungsbeispiel, außerhalb der Ansprüche)

27,3 Teile des Farbstoffes der Formel 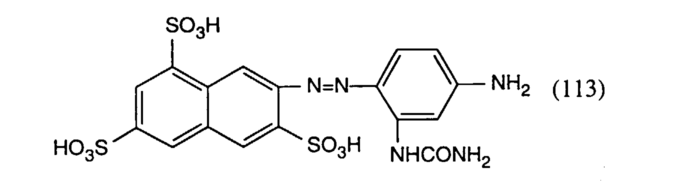 werden in 600 Vol.Teilen Wasser gelöst und mit 7 Teilen 2,4,6-Trifluor-1,3,5-triazin kondensiert. Wenn keine diazotierbaren Aminogruppen mehr nachweisbar sind, versetzt man die Farbstofflösung bei 0 bis 5° und einem pH-Wert von 5-7 mit 2 bis 2,5 Teilen Aethylendiamin. Der pH-Wert des Reaktionsgemisches wird nun durch Zufügen von Natriumcarbonat auf 7,5 und die Temperatur langsam auf 25° erhöht. Nach beendigter Kondensation wird mit 2 bis 5 Teilen Acetanhydrid bei pH 8-9 acyliert. Anschliessend wird eine Mischung der Farbstoffe der Formeln 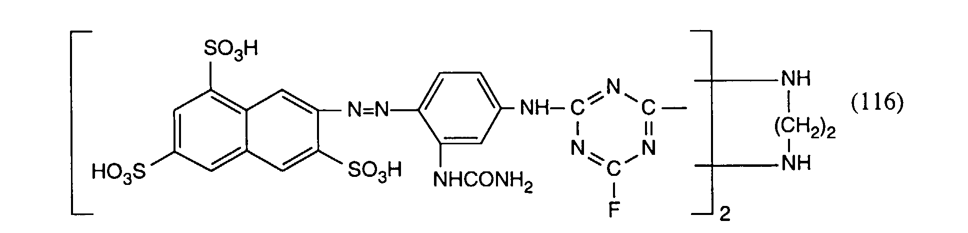 und 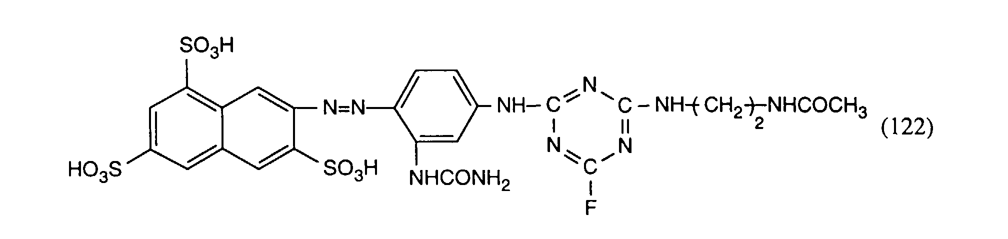 nach Zugabe von Puffersalzen mit Natriumchlorid gefällt, filtriert, gewaschen und getrocknet. Er stellt ein oranges Pulver dar und färbt Baumwolle in goldgelben Tönen.

Anstelle von Acetanhydrid können andere Acylierungsmittel, insbesondere aliphatische, aromatische oder heterocyclische Carbonsäurechloride, verwendet werden, beispielsweise Acetylchlorid, Propionylchlorid, Propionsäureanhydrid, 2-Propancarbonsäurechlorid, Carboxypropionylchlorid, Butyrylchlorid, Benzoylchlorid, 4-Methylbenzoylchlorid, Benzylcarbonsäurechlorid, 4-Sulfobenzylcarbonsäurechlorid und Pyridin-3-carbonsäurechlorid.

Anstelle des Aethylendiamins und des angegebenen Chromophors können auch die im Anschluss an Beispiel 3 aufgeführten Diamine bzw. Chromophore verwendet werden.

## Patentansprüche (Patentansprüche für folgende(n) Vertragsstaat(en): BE, CH, LI, DE, FR, GB, IT)

1. Farbstoffmischungen, dadurch gekennzeichnet, dass sie Farbstoffe der Formeln 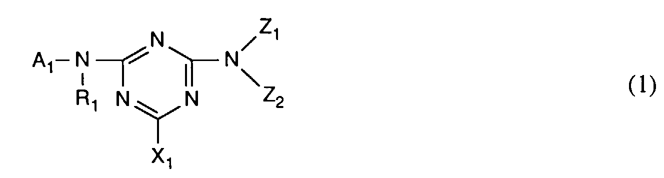 und 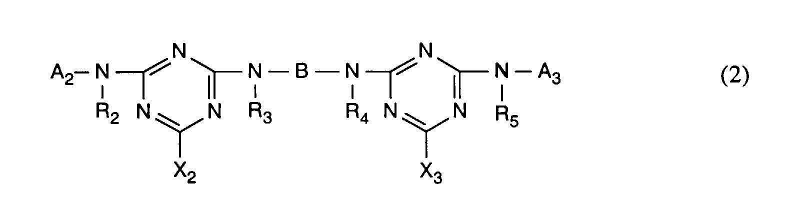
enthalten, worin A₁, A₂ und A₃ unabhängig voneinander der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aromatisches Brückenglied, und Z₁ und Z₂ Wasserstoff oder ein aliphatischer, aromatischer oder heterocyclischer Rest sind, oder Z₁ und Z₂ mit dem sie verbindenden Stickstoffatom einen fünf- bis siebengliedrigen Ring bilden, der ausser C-Atomen weitere Heteroatome enthalten kann, und
X₁, X₂ und X₃ unabhängig voneinander je Fluor, Chlor, Brom, Sulfo oder
Carboxypyridinium bedeuten.

2. Farbstoffmischungen gemäss Anspruch 1, dadurch gekennzeichnet, dass die Reste A₁, A₂, A₃, Z₁ und Z₂ unabhängig voneinander faserreaktive Reste enthalten.

3. Farbstoffmischungen gemäss einem der Ansprüche 1 und 2, dadurch gekennzeichnet, dass das Gewichtsverhältnis der Farbstoffe der Formeln (1):(2) 5:95 bis 95:5, insbesondere 30:70 bis 70:30, ist.

4. Farbstoffmischungen gemäss einem der Ansprüche 1 bis 3, dadurch gekennzeichnet, dass B ein gegebenenfalls substituierter Phenylenrest, Naphthylenrest, oder Rest eines Diphenyls oder Stilbens oder ein Rest der Formel 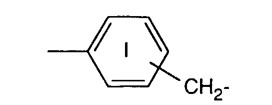 ist, wobei der Benzring I weitere Substituenten enthalten kann.

5. Farbstoffmischungen gemäss Anspruch 4, dadurch gekennzeichnet, dass B ein unsubstituierter oder durch C₁-C₄-Alkyl, C₁-C₄-Alkoxy, Halogen, Carboxy oder Sulfo substituierter Phenylenrest, Naphthylenrest, oder Rest eines Diphenyls oder Stilbens ist.

6. Farbstoffmischungen gemäss Anspruch 4, dadurch gekennzeichnet, dass B der Phenylenrest oder ein Sulfophenylenrest ist.

7. Farbstoffmischungen gemäss einem der Ansprüche 1 bis 6, dadurch gekennzeichnet, dass der Rest -N(Z₁)Z₂ -NH₂, 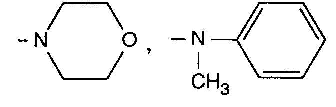 oder -NH-(CH₂)₂-NH-CO-CH₃ ist.

8. Farbstoffmischungen gemäss einem der Ansprüche 1 bis 7, dadurch gekennzeichnet, dass X₁ Fluor und X₂ und X₃ unabhängig voneinander Fluor oder Chlor sind.

9. Farbstoffmischungen gemäss Anspruch 8, dadurch gekennzeichnet, dass X₁, X₂ und X₃ Fluor sind.

10. Farbstoffmischungen gemäss einem der Ansprüche 1 bis 9, dadurch gekennzeichnet, dass R₁, R₂, R₃, R₄ und R₅ unabhängig voneinander Wasserstoff, Methyl oder Aethyl sind.

11. Farbstoffmischungen gemäss Anspruch 10, dadurch gekennzeichnet, dass R₃ und R₄ Wasserstoff sind.

12. Farbstoffmischungen gemäss einem der Ansprüche 1 bis 11, dadurch gekennzeichnet, dass A₁, A₂ und A₃ unabhängig voneinander Monoazo- oder Disazofarbstoffreste oder Formazanfarbstoffreste sind.

13. Farbstoffmischungen gemäss einem der Ansprüche 1 bis 12, dadurch gekennzeichnet, dass die Reste A₂ und A₃ identisch sind.

14. Farbstoffmischungen gemäss einem der Ansprüche 1 bis 13, dadurch gekennzeichnet, dass die Reste A₁, A₂ und A₃ identisch sind.

15. Verfahren zur Herstellung von Farbstoffmischungen bestehend aus den Farbstoffen der Formeln (1) und (2) gemäss Anspruch 1, dadurch gekennzeichnet, dass man ein oder zwei Aequivalente eines organischen Farbstoffes der Formel 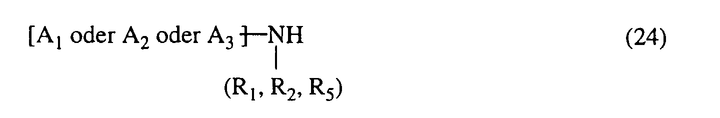 oder ein Farbstoffvorprodukt, mindestens ein Aequivalent eines s-Triazins, mindestens ein Aequivalent eines Diamins der Formel 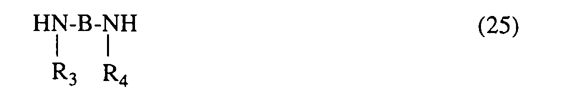 in beliebiger Reihenfolge miteinander umsetzt, wobei A₁, A₂, A₃, R₁, R₂, R₃, R₄, R₅ und B die in Anspruch (1) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

16. Verfahren zum Färben und Bedrucken von cellulosehaltigen Fasermaterialien mit einer Farbstoffmischung, dadurch gekennzeichnet, dass man eine Farbstoffmischung gemäss einem der Ansprüche 1 bis 14 verwendet.

17. Verfahren gemäss Anspruch 16 zum Färben und Bedrucken von Baumwolle.

18. Verwendung der Farbstoffmischung gemäss Anspruch 1 zum Färben und Bedrucken von cellulosehaltigen Fasermaterialien.

19. Färbe- bzw. Druckpräparate, die eine Farbstoffmischung gemäss den Ansprüchen 1 bis 14 enthalten.

20. Das gemäss den Ansprüchen 1 bis 19 gefärbte oder bedruckte Material, insbesondere das Textilmaterial.

## Patentansprüche (Patentansprüche für folgende(n) Vertragsstaat(en): ES)

1. Verfahren zur Herstellung von Farbstoffmischungen bestehend aus den Farbstoffen der Formeln 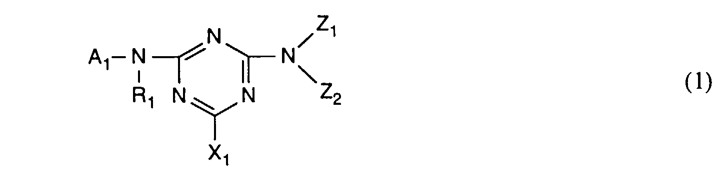 und 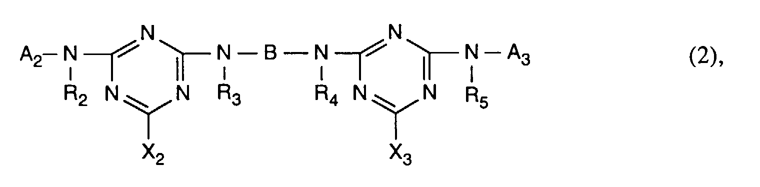 worin A₁, A₂ und A₃ unabhängig voneinander der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R_{2,} R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aromatisches Brückenglied, und Z₁ und Z₂ Wasserstoff oder ein aliphatischer, aromatischer oder heterocyclischer Rest sind, oder Z₁ und Z₂ mit dem sie verbindenden Stickstoffatom einen fünf- bis siebengliedrigen Ring bilden, der ausser C-Atomen weitere Heteroatome enthalten kann, und X₁, X₂ und X₃ unabhängig voneinander Fluor, Chlor, Brom, Sulfo oder Carboxypyridinium bedeuten, dadurch gekennzeichnet, dass man ein oder zwei Aequivalente eines organischen Farbstoffes der Formel 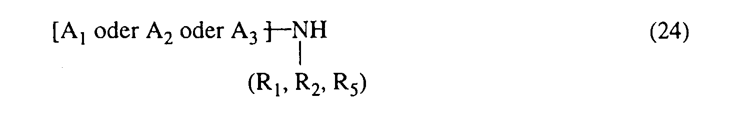 oder ein Farbstoffvorprodukt, mindestens ein Aequivalent eines s-Triazins, mindestens ein Aequivalent eines Diamins der Formel 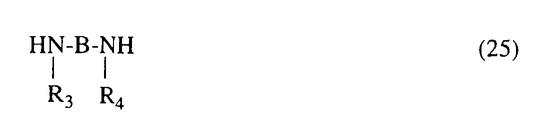 in beliebiger Reihenfolge miteinander umsetzt, wobei A₁, A₂, A₃, R₁, R₂, R₃, R₄, R₅ und B die oben angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

2. Verfahren gemäss Anspruch 1 zur Herstellung von Farbstoffmischungen bestehend aus den Farbstoffen der Formeln (1) und (2), worin die Reste A₁, A₂, A₃, Z₁ und Z₂ unabhängig voneinander faserreaktive Reste enthalten.

3. Verfahren gemäss einem der Ansprüche 1 und 2 zur Herstellung von Farbstoffmischungen bestehend aus den Farbstoffen der Formeln (1) und (2), wobei das Gewichtsverhältnis der Farbstoffe der Formeln (1):(2) 5:95 bis 95:5, insbesondere 30:70 bis 70:30, ist.

4. Verfahren gemäss einem der Ansprüche 1 bis 3 zur Herstellung von Farbstoffmischungen bestehend aus den Farbstoffen der Formeln (1) und (2), worin B ein gegebenenfalls substituierter Phenylenrest, Naphthylenrest, oder Rest eines Diphenyls oder Stilbens oder ein Rest der Formel 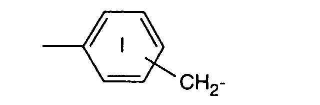 ist, wobei der Benzring I weitere Substituenten enthalten kann.

5. Verfahrenen gemäss Anspruch 4 zur Herstellung von Farbstoffmischungen bestehend aus den Farbstoffen der Formeln (1) und (2), worin B ein unsubstituierter oder durch C₁-C₄-Alkyl, C₁-C₄-Alkoxy, Halogen, Carboxy oder Sulfo substituierter Phenylenrest, Naphthylenrest, oder Rest eines Diphenyls oder Stilbens ist.

6. Verfahren gemäss Anspruch 4 zur Herstellung von Farbstoffmischungen bestehend aus den Farbstoffen der Formeln (1) und (2), worin B der Phenylenrest oder ein Sulfophenylenrest ist.

7. Verfahren gemäss einem der Ansprüche 1 bis 6 zur Herstellung von Farbstoffmischungen bestehend aus den Farbstoffen der Formeln (1) und (2), worin der Rest -N(Z₁)Z₂ -NH₂, 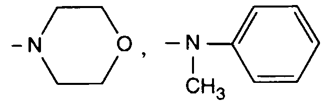 oder -NH-(CH₂)₂-NH-CO-CH₃ ist.

8. Verfahren gemäss einem der Ansprüche 1 bis 7 zur Herstellung von Farbstoffmischungen bestehend aus den Farbstoffen der Formeln (1) und (2), worin X₁ Fluor und X₂ und X₃ unabhängig voneinander Fluor oder Chlor sind.

9. Verfahren gemäss Anspruch 8 zur Herstellung von Farbstoffmischungen bestehend aus den Farbstoffen der Formeln (1) und (2), worin X₁, X₂ und X₃ Fluor sind.

10. Verfahren gemäss einem der Ansprüche 1 bis 9 zur Herstellung von Farbstoffmischungen bestehend aus den Farbstoffen der Formeln (1) und (2), worin R₁, R₂, R₃, R₄ und R₅ unabhängig voneinander Wasserstoff, Methyl oder Aethyl sind.

11. Verfahren gemäss Anspruch 10 zur Herstellung von Farbstoffmischungen bestehend aus den Farbstoffen der Formeln (1) und (2), worin R₃ und R₄ Wasserstoff sind.

12. Verfahren gemäss einem der Ansprüche 1 bis 11 zur Herstellung von Farbstoffmischungen bestehend aus den Farbstoffen der Formeln (1) und (2), worin A₁, A₂ und A₃ unabhängig voneinander Monoazo- oder Disazofarbstoffreste oder Formazanfarbstoffreste sind.

13. Verfahren gemäss einem der Ansprüche 1 bis 12 zur Herstellung von Farbstoffmischungen bestehend aus den Farbstoffen der Formeln (1) und (2), worin die Reste A₂ und A₃ identisch sind.

14. Verfahren gemäss einem der Ansprüche 1 bis 13 zur Herstellung von Farbstoffmischungen bestehend aus den Farbstoffen der Formeln (1) und (2), worin die Reste A₁, A₂ und A₃ identisch sind.

15. Farbstoffmischungen, dadurch gekennzeichnet, dass sie Farbstoffe der Formeln 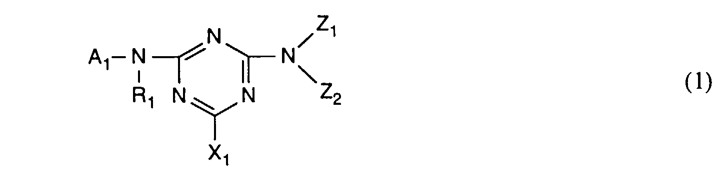 und 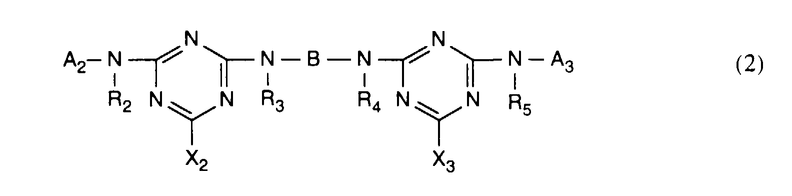
enthalten, worin A₁, A₂ und A₃ unabhängig voneinander der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes, R₁, R₂, R₃, R₄ und R₅ unabhängig voneinander Wasserstoff oder C₁-C₄-Alkyl, das durch Halogen, Hydroxy, Cyan, C₁-C₄-Alkoxy, C₁-C₄-Alkoxycarbonyl, Carboxy, Sulfamoyl, Sulfo oder Sulfato substituiert sein kann, B ein aromatisches Brückenglied, und Z₁ und Z₂ Wasserstoff oder ein aliphatischer, aromatischer oder heterocyclischer Rest sind, oder Z₁ und Z₂ mit dem sie verbindenden Stickstoffatom einen fünf- bis siebengliedrigen Ring bilden, der ausser C-Atomen weitere Heteroatome enthalten kann, und
X₁, X₂ und X₃ unabhängig voneinander je Fluor, Chlor, Brom, Sulfo oder Carboxypyridinium bedeuten.

16. Verfahren zum Färben und Bedrucken von cellulosehaltigen Fasermaterialien mit einer Farbstoffmischung, dadurch gekennzeichnet, dass man eine gemäss einem der Ansprüche 1 bis 14 erhältliche Farbstoffmischung verwendet.

17. Verfahren gemäss Anspruch 16 zum Färben und Bedrucken von Baumwolle.

18. Verwendung der gemäss Anspruch 1 erhältlichen Farbstoffmischung zum Färben und Bedrucken von cellulosehaltigen Fasermaterialien.

19. Färbe- bzw. Druckpräparate, die eine Farbstoffmischung gemäss den Ansprüchen 1 bis 14 enthalten.

## Claims (Claims for the following Contracting State(s): BE, CH, LI, DE, FR, GB, IT)

1. Dye mixtures, characterized in that they contain dyes of the formulae 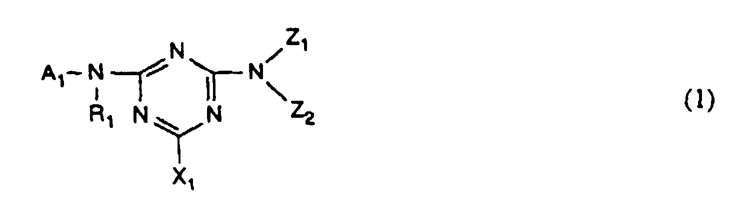 and 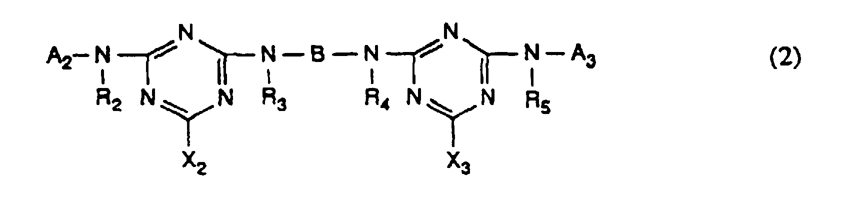 in which A₁, A₂ and A₃, independently of one another, are the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye, R₁, R₂, R₃, R₄ and R₅, independently of one another, are hydrogen or C₁-C₄alkyl, which can be substituted by halogen, hydroxyl, cyano, C₁-C₄alkoxy, C₁-C₄alkoxycarbonyl, carboxyl, sulfamoyl, sulfo or sulfato, B is an aromatic bridging member, and Z₁ and Z₂ are hydrogen or an aliphatic, aromatic or heterocyclic radical, or Z₁ and Z₂, together with the nitrogen atom linking them, form a five- to seven-membered ring, which apart from C atoms can contain further heteroatoms, and X₁, X₂ and X₃, independently of one another, are each fluorine, chlorine, bromine, sulfo or carboxypyridinium.

2. Dye mixtures according to claim 1, characterized in that the radicals A₁, A₂, A₃, Z₁ and Z₂, independently of one another, contain fibre-reactive radicals.

3. Dye mixtures according to either of claims 1 and 2, characterized in that the weight ratio of the dyes of the formulae (1): (2) is 5:95 to 95:5, in particular 30:70 to 70:30.

4. Dye mixtures according to any one of claims 1 to 3, characterized in that B is a substituted or unsubstituted phenylene radical, naphthylene radical, or radical of a biphenyl or stilbene or a radical of the formula 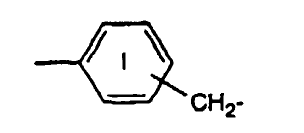 where the benzene ring I may contain further substituents.

5. Dye mixtures according to claim 4, characterized in that B is an unsubstituted or C₁-C₄alkyl-, C₁-C₄alkoxy-, halogen-, carboxyl- or sulfo-substituted phenylene radical, naphthylene radical or radical of a biphenyl or stilbene.

6. Dye mixtures according to claim 4, characterized in that B is phenylene or a sulfophenylene radical.

7. Dye mixtures according to any one of claims 1 to 6, characterized in that the radical -N(Z₁)Z₂ is -NH₂, 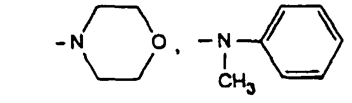 or -NH-(CH₂)₂-NH-CO-CH₃.

8. Dye mixtures according to any one of claims 1 to 7, characterized in that X₁ is fluorine and X₂ and X₃, independently of one another, are fluorine or chlorine.

9. Dye mixtures according to claim 8, characterized in that X₁, X₂ and X₃ are fluorine.

10. Dye mixtures according to any one of claims 1 to 9, characterized in that R₁, R₂, R₃, R₄ and R₅, independently of one another, are hydrogen, methyl or ethyl.

11. Dye mixtures according to claim 10, characterized in that R₃ and R₄ are hydrogen.

12. Dyes mixtures according to any one of claims 1 to 11, characterized in that A₁, A₂ and A₃, independently of one another, are monoazo or disazo dye radicals or formazan dye radicals.

13. Dye mixtures according to any one of claims 1 to 12, characterized in that the radicals A₂ and A₃ are identical.

14. Dye mixtures according to any one of claims 1 to 13, characterized in that the radicals A₁, A₂ and A₃ are identical.

15. A process for preparing dye mixtures consisting of the dyes of the formulae (1) and (2) according to claim 1, characterized in that it comprises reacting one or two equivalents of an organic dye of the formula 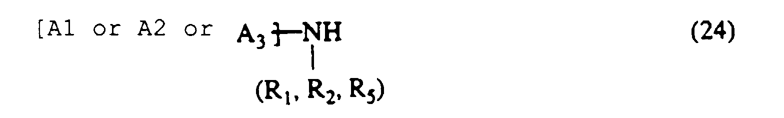 or a dye precursor, at least one equivalent of an s-triazine, at least one equivalent of a diamine of the formula 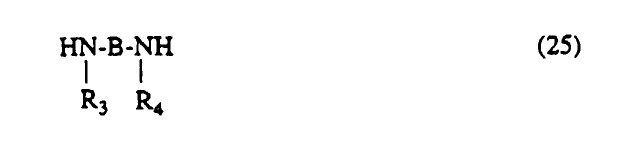 where A₁, A₂, A₃, R₁, R₂, R₃, R₄, R₅ and B are each as defined in claim (1), with one another in any desired order, or, in the case where dye precursors are used, converting the intermediates obtained into the desired dyes and, if desired, subsequently carrying out a further conversion reaction.

16. A process for the dyeing and printing of cellulosic fibre materials using a dye mixture, characterized in that it comprises using a dye mixture according to any one of claims 1 to 14.

17. A process according to claim 16 for the dyeing and printing of cotton.

18. Use of a dye mixture according to claim 1 for the dyeing and printing of cellulosic fibre materials.

19. A dyeing or printing product comprising a dye mixture according to claims 1 to 14.

20. A material dyed or printed according to claims 1 to 19, in particular a textile material.

## Claims (Claims for the following Contracting State(s): ES)

1. A process for preparing dye mixtures consisting of the dyes of the formulae 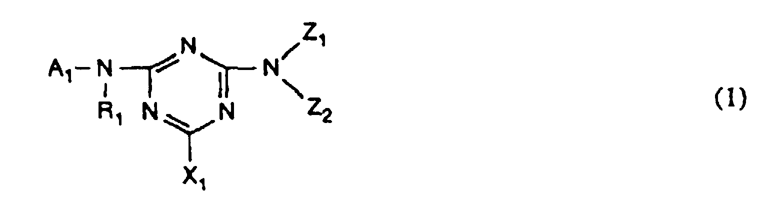 and 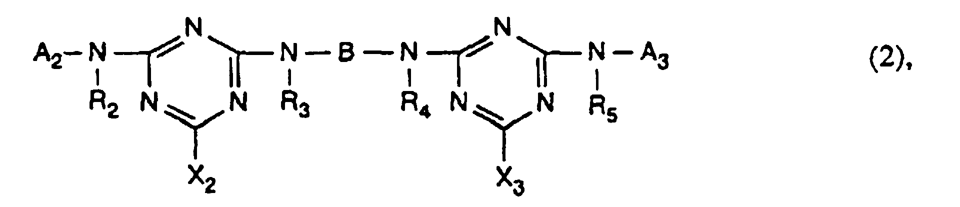 in which A₁, A₂ and A₃, independently of one another, are the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide dye, R₁, R₂, R₃, R₄ and R₅, independently of one another, are hydrogen or C₁-C₄alkyl, which can be substituted by halogen, hydroxyl, cyano, C₁-C₄alkoxy, C₁-C₄alkoxycarbonyl, carboxyl, sulfamoyl, sulfo or sulfato, B is an aromatic bridging member, and Z₁ and Z₂ are hydrogen or an aliphatic, aromatic or heterocyclic radical, or Z₁ and Z₂, together with the nitrogen atom linking them, form a five- to seven-membered ring, which apart from C atoms can contain further heteroatoms, and X₁, X₂ and X₃, independently of one another, are fluorine, chlorine, bromine, sulfo or carboxypyridinium, characterized in that it comprises reacting one or two equivalents of an organic dye of the formula 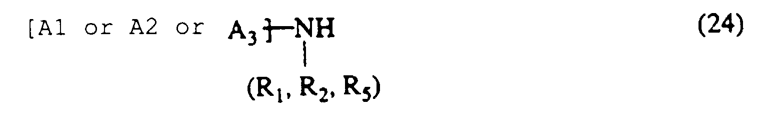 or a dye precursor, at least one equivalent of an s-triazine, at least one equivalent of a diamine of the formula 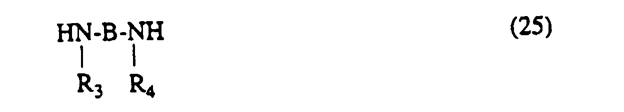 where A₁, A₂, A₃, R₁, R₂, R₃, R₄, R₅ and B are each as defined above, with one another in any desired order, or, in the case where dye precursors are used, converting the intermediates obtained into the desired dyes and, if desired, subsequently carrying out a further conversion reaction.

2. A dye mixture according to claim 1 for preparing dye mixtures consisting of the dyes of the formulae (1) and (2) where the radicals A₁, A₂, A₃, Z₁ and Z₂, independently of one another, contain fibre-reactive radicals.

3. A process according to either of claims 1 and 2 for preparing dye mixtures consisting of the dyes of the formulae (1) and (2) where the weight ratio of the dyes of the formulae (1):(2) is 5:95 to 95:5, in particular 30:70 to 70:30.

4. A process according to any one of claims 1 to 3 for preparing dye mixtures consisting of the dyes of the formulae (1) and (2) where B is a substituted or unsubstituted phenylene radical, naphthylene radical or radical of a biphenyl or stilbene or a radical of the formula 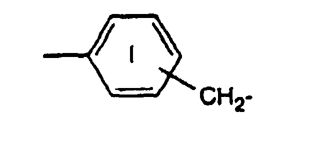 where the benzene ring I may contain further substituents.

5. A process according to claim 4 for preparing dye mixtures consisting of the dyes of the formulae (1) and (2) where B is an unsubstituted or C₁-C₄alkyl-, C₁-C₄alkoxy-, halogen-, carboxyl- or sulfo-substituted phenylene radical, naphthylene radical or radical of a biphenyl or stilbene.

6. A process according to claim 4 for preparing dye mixtures consisting of the dyes of the formulae (1) and (2) where B is phenylene or a sulfophenylene radical.

7. A process according to any one of claims 1 to 6 for preparing dye mixtures consisting of the dyes of the formulae (1) and (2) where the radical -N(Z₁)Z₂ is -NH₂, 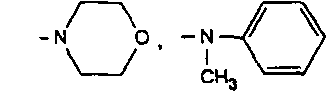 or -NH-(CH₂)₂-NH-CO-CH₃.

8. A process according to any one of claims 1 to 7 for preparing dye mixtures consisting of the dyes of the formulae (1) and (2) where X₁ is fluorine and X₂ and X₃, independently of one another, are fluorine or chlorine.

9. A process according to claim 8 for preparing dye mixtures consisting of the dyes of the formulae (1) and (2) where X₁, X₂ and X₃ are fluorine.

10. A process according to any one of claims 1 to 9 for preparing dye mixtures consisting of the dyes of the formulae (1) and (2) where R₁, R₂, R₃, R₄ and R₅, independently of one another, are hydrogen, methyl or ethyl.

11. A process according to claim 10 for preparing dye mixtures consisting of the dyes of the formulae (1) and (2) where R₃ and R₄ are hydrogen.

12. A process according to any one of claims 1 to 11 for preparing dye mixtures consisting of the dyes of the formulae (1) and (2) where A₁, A₂ and A₃, independently of one another, are monoazo or disazo dye radicals or formazan dye radicals.

13. A process according to any one of claims 1 to 12 for preparing dye mixtures consisting of the dyes of the formulae (1) and (2) where the radicals A₂ and A₃ are identical.

14. A process according to any one of claims 1 to 13 for preparing dye mixtures consisting of the dyes of the formulae (1) and (2) where the radicals A₁, A₂ and A₃ are identical.

15. A process for the dyeing and printing of cellulosic fibre materials with a dye mixture, characterized in that it comprises using a dye mixture obtainable according to any one of claims 1 to 14.

16. A process according to claim 15 for the dyeing and printing of cotton.

17. The use of a dye mixture obtainable according to claim 1 for the dyeing and printing of cellulosic fibre materials.

18. A dyeing or printing product comprising a dye mixture according to claims 1 to 14.

## Revendications (Revendications pour l'(les) Etat(s) contractant(s) suivant(s): BE, CH, LI, DE, FR, GB, IT)

1. Composition de colorants, caractérisée en ce qu'elle contient des colorants des formules 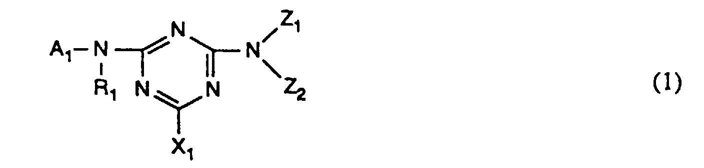 et 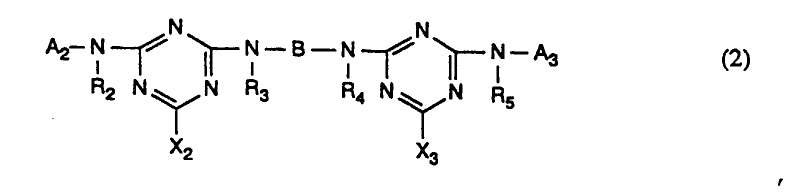 dans lesquelles
A₁, A₂ et A₃ représentent indépendamment les uns des autres le résidu d'un colorant monoazoïque, polyazoïque, métallique azoïque complexe, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide,
R₁, R₂, R₃, R₄ et R₅ représentent indépendamment les uns des autres un atome d'hydrogène ou un groupe alkyle en C₁-C₄ qui peut être substitué par un atome d'halogène, un groupe hydroxy, cyano, alcoxy en C₁-C₄, (alcoxy en C₁-C₄)carbonyle, carboxy, sulfamoyle, sulfo ou sulfato,
B représente un groupement pontant aromatique, et
Z₁ et Z₂ représentent un atome d'hydrogène ou un groupe aliphatique, aromatique ou hétérocyclique, ou Z₁ et Z₂ forment avec l'atome d'azote auquel ils sont liés un cycle à cinq à sept chaînons, qui peut contenir en plus des atomes de carbone d'autres hétéroatomes, et
X₁, X₂ et X₃ représentent indépendamment les uns des autres un atome de fluor, de chlore, de brome, un groupe sulfo ou carboxypyridinium.

2. Composition de colorants selon la revendication 1, caractérisée en ce que, les groupes A₁, A₂, A₃, Z₁ et Z₂ contiennent indépendamment les uns des autres des groupes réactifs avec les fibres.

3. Composition de colorants selon l'une des revendications 1 et 2, caractérisée en ce que le rapport en poids des colorants des formules (1) : (2) est compris entre 5 : 95 et 95 : 5, en particulier entre 30 : 70 et 70 : 30.

4. Composition de colorants selon l'une des revendications 1 à 3, caractérisée en ce que B est un groupe phénylène, un groupe napthylène éventuellement substitué, ou le résidu d'un groupe diphényle ou stilbène ou un groupe de formule 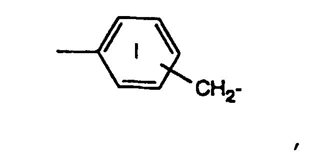 dans laquelle le noyau benzénique I peut contenir d'autres substituants.

5. Composition de colorants selon la revendication 4, caractérisée en ce que B est un groupe non substitué ou substitué par un groupe alkyle en C₁ à C₄, alcoxy en C₁ à C₄, un atome d'halogène, un groupe carboxy ou sulfo, ou le résidu d'un diphényle ou d'un stilbène.

6. Composition de colorants selon la revendication 4, caractérisée en ce que B est le groupe phénylène ou un groupe sulfophénylène.

7. Composition de colorants selon l'une des revendications 1 à 6, caractérisée en ce que le groupe -N(Z₁)Z₂ est le groupe -NH₂, 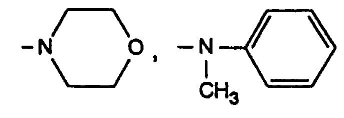 ou -NH-(CH₂)₂-NH-CO-CH₃.

8. Composition de colorants selon l'une des revendications 1 à 7, caractérisée en ce que X₁ est un atome de fluor et X₂ et X₃ sont indépendamment l'un de l'autre un atome de fluor ou de chlore.

9. Composition de colorants selon la revendication 8, caractérisée en ce que, X₁, X₂ et X₃ sont des atomes de fluor.

10. Composition de colorants selon l'une des revendications 1 à 9, caractérisée en ce que R₁, R₂, R₃, R₄ et R₅ sont indépendamment l'un de l'autre un atome d'hydrogène, un groupe méthyle ou éthyle.

11. Composition de colorants selon l'une des revendications 1 à 10, caractérisée en ce que R₃ et R₄ sont des atomes d'hydrogène.

12. Composition de colorants selon l'une des revendications 1 à 11, caractérisée en ce que A₁, A₂ et A₃ sont indépendamment les uns des autres des groupes monoazoïques ou bisazoïques ou des résidus de colorant formazan.

13. Composition de colorants selon l'une des revendications 1 à 12, caractérisée en ce que les groupes A₁ et A₃ sont identiques.

14. Composition de colorants selon l'une des revendications 1 à 13, caractérisée en ce que les groupes A₁, A₂ et A₃ sont identiques.

15. Procédé pour la préparation de compositions de colorants à partir des colorants des formules (1) et (2) selon la revendication 1, caractérisé en ce que, l'on met à réagir ensemble dans un ordre quelconque un ou deux équivalents d'un colorant organique de formule 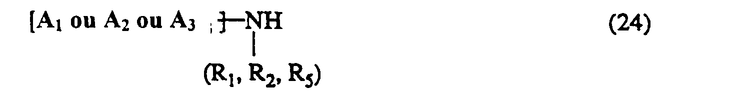 ou d'un précurseur de colorant, au moins un équivalent d'une s-triazine, au moins un équivalent d'une diamine de formule 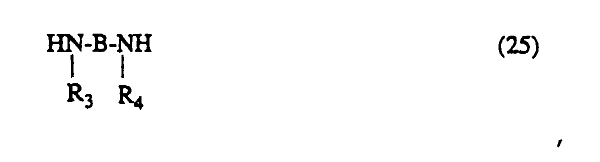 formules dans lesquelles A₁, A₂, A₃, R₁, R₂, R₃, R₄, R₅, B, ont les significations indiquées à la revendication (1), ou, dans le cas de l'utilisation de précurseurs de colorants, en transformant les demi-produits obtenus pour obtenir les colorants souhaités et en y adjoignant éventuellement une autre réaction de conversion.

16. Procédé pour la teinture et l'impression de matériaux en fibres cellulosiques avec une composition de colorants, caractérisé en ce que, l'on utilise une composition de colorants selon l'une des revendications 1 à 14.

17. Procédé selon la revendication 16 pour la teinture et l'impression du coton.

18. Utilisation de la composition de colorants selon la revendication 1 pour la coloration et l'impression de matériaux en fibres cellulosiques.

19. Préparation de teinture ou d'impression, qui contient un mélange de colorants selon les revendications 1 à 14.

20. Matériau teinté ou imprimé selon les revendications 1 à 19, en particulier le matériau textile.

## Revendications (Revendications pour l'(les) Etat(s) contractant(s) suivant(s): ES)

1. Procédé pour la préparation de compositions de colorants constitués des colorants des formules 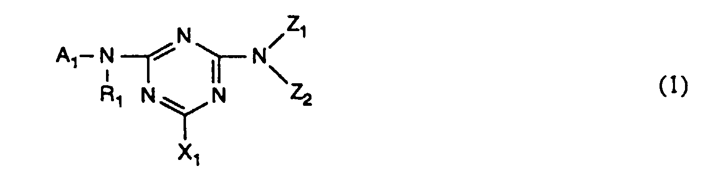 et 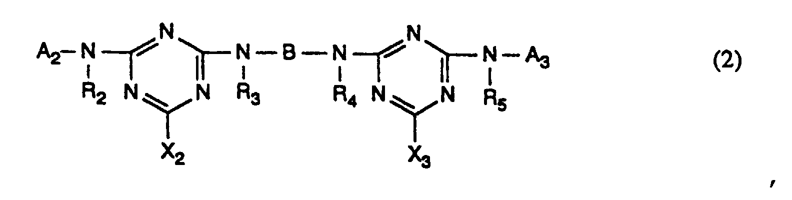 dans lesquelles
A₁, A₂ et A₃ représentent indépendamment les uns des autres le résidu d'un colorant monoazoïque, polyazoïque, métallique azoïque complexe, anthraquinone, phtalocyanine, formazan, azométhine, dioxazine, phénazine, stilbène, triphénylméthane, xanthène, thioxanthone, nitroaryle, naphtoquinone, pyrènequinone ou pérylène-tétracarbimide,
R₁, R₂, R₃, R₄ et R₅ représentent indépendamment les uns des autres un atome d'hydrogène ou un groupe alkyle en C₁-C₄ qui peut être substitué par un atome d'halogène, un groupe hydroxy, cyano, alcoxy en C₁-C₄, (alcoxy en C₁-C₄)carbonyle, carboxy, sulfamoyle, sulfo ou sulfato,
B représente un groupement pontant aromatique, et
Z₁ et Z₂ représentent un atome d'hydrogène ou un groupe aliphatique, aromatique ou hétérocyclique, ou Z₁ et Z2 forment avec l'atome d'azote auquel ils sont liés un cycle à cinq à sept chaînons, qui peut contenir en plus des atomes de carbone d'autres hétéroatomes, et
X₁, X₂ et X₃ représentent indépendamment les uns des autres un atome de fluor, de chlore, de brome, un groupe sulfo ou carboxypyridinium,
caractérisé en ce que, l'on met à réagir ensemble dans un ordre quelconque un ou deux équivalents d'un colorant organique de formule 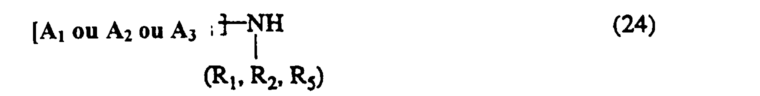 ou d'un précurseur de colorant, au moins un équivalent d'une s-triazine, au moins un équivalent d'une diamine de formule 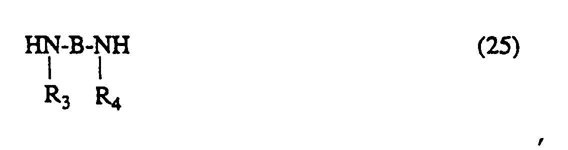 formules dans lesquelles A₁, A₂, A₃, R₁, R₂, R₃, R₄, R₅ et B, ont les significations indiquées ci-dessus, ou, dans le cas de l'utilisation de précurseurs de colorants, en transformant les demi-produits obtenus pour obtenir les colorants souhaités et en y adjoignant éventuellement une autre réaction de conversion.

2. Procédé selon la revendication 1 pour la préparation de compositions de colorants constituées des colorants des formules (1) et (2), dans lesquelles les groupes A₁, A₂, A₃, Z₁ et Z₂ contiennent indépendamment les uns des autres des groupes réactifs avec les fibres.

3. Procédé selon l'une des revendications 1 et 2 pour la préparation de compositions de colorants constituées des colorants des formules (1) et (2), caractérisée en ce que le rapport en poids des colorants des formules (1) : (2) est compris entre 5 : 95 et 95 : 5, en particulier entre 30 : 70 et 70 : 30.

4. Procédé selon l'une des revendications 1 à 3 pour la préparation de compositions de colorants constituées des colorants des formules (1) et (2), dans lequel B est un groupe phénylène, un groupe naphtylène éventuellement substitué, ou le résidu d'un groupe diphényle ou stilbène ou un groupe de formule 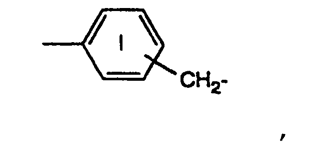 dans laquelle le noyau benzénique I peut contenir d'autres substituants.

5. Procédé selon la revendication 4 pour la préparation de compositions de colorants constituées des colorants des formules (1) et (2), dans lequel B est un groupe non substitué ou substitué par un groupe alkyle en C₁ à C₄, alcoxy en C₁ à C₄, un atome d'halogène, un groupe carboxy ou sulfo, ou le résidu d'un diphényle ou d'un stilbène.

6. Procédé selon la revendication 4 pour la préparation de compositions de colorants des formules (1) et (2), dans lequel B est le groupe phénylène ou un groupe sulfophénylène.

7. Procédé selon l'une des revendications 1 à 6 pour la préparation de compositions de colorants constituées des colorants des formules (1) et (2), dans lequel le groupe -N(Z₁)Z₂ est le groupe -NH₂, 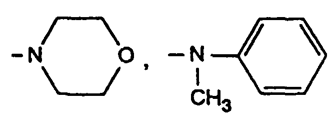 ou -NH-(CH₂)₂-NH-CO-CH_{3.}

8. Procédé selon l'une des revendications 1 à 7 pour la préparation de compositions de colorants constituées des colorants des formules (1) et (2), dans lequel X₁ est un atome de fluor et X₂ et X₃ sont indépendamment l'un de l'autre un atome de fluor ou de chlore.

9. Procédé selon la revendication 8 pour la préparation de compositions de colorants constituées des colorants des formules (1) et (2), dans lequel X₁, X₂ et X₃ sont des atomes de fluor.

10. Procédé selon l'une des revendications 1 à 9 pour la préparation de compositions de colorants constituées des colorants des formules (1) et (2), dans lequel R₁, R₂, R₃, R₄ et R₅ sont indépendamment l'un de l'autre un atome d'hydrogène, un groupe méthyle ou éthyle.

11. Procédé selon la revendications 10 pour la préparation de compositions de colorants constituées des colorants des formules (1) et (2), dans lequel R₃ et R₄ sont des atomes d'hydrogène.

12. Procédé selon l'une des revendications 1 à 11 pour la préparation de compositions de colorants constituées des colorants des formules (1) et (2), dans lequel A₁, A₂ et A₃ sont indépendamment les uns des autres des groupes monoazoïques ou bisazoïques ou des résidus de colorant formazan.

13. Procédé selon l'une des revendications 1 à 12 pour la préparation de compositions de colorants constituées des colorants des formules (1) et (2), dans lequel les groupes A₁ et A₃ sont identiques.

14. Procédé selon l'une des revendications 1 à 13 pour la préparation de compositions de colorants constituées des colorants des formules (1) et (2), dans lequel les groupes A₁, A₂ et A₃ sont identiques.

15. Procédé pour la teinture et l'impression de matériaux en fibres cellulosiques avec une composition de colorants, caractérisé en ce que, l'on utilise un mélange de colorants selon l'une des revendications 1 à 14.

16. Procédé selon la revendication 15 pour la teinture et l'impression du coton.

17. Utilisation de la composition qu'on peut obtenir selon la revendication 1 pour la teinture et l'impression de matériaux en fibres cellulosiques.

18. Préparation d'impression ou de teinture, qui contient une composition de colorants selon les revendications 1 à 14.
